# EUROPÄISCHE PATENTSCHRIFT

(11) **EP 0 955 222 B1**
(45) Veröffentlichungstag und Bekanntmachung des Hinweises auf die Patenterteilung: **24.11.2004**
(21) Anmeldenummer: 99116531.7
(22) Anmeldetag: 07.09.1996
(51) Int. Cl.: B60T 13/16, F16D 55/224, B60T 8/44

(54) **Hydraulische Bremsanlage, insbesondere für Kraftfahrzeuge**
Hydraulic brake system, especially for vehicles
Système de freinage hydraulique, notamment pour véhicules

(30) Priorität: 12.09.1995 DE 19533481; 08.05.1996 DE 19618489
(43) Veröffentlichungstag der Anmeldung: 10.11.1999
(62) Teilanmeldung aus: 96114352.6
(73) Patentinhaber: FTE automotive GmbH & Co. KG, 96106 Ebern (DE)
(72) Erfinder: Heubner, Wilhelm, Dipl.-Ing.(FH), 96274 Itzgrund-Kaltenbrunn (DE)
(74) Vertreter: Oppermann, Mark, Dipl.-Ing.

(56) Entgegenhaltungen:
- EP-A- 0 344 455
- EP-A- 0 355 324
- EP-A- 0 365 769
- DE-A- 2 450 874

## Beschreibung

Die Erfindung bezieht sich auf eine hydraulische Bremsanlage. Insbesondere bezieht sich die Erfindung auf eine hydraulische Hilfskraft- bzw. Fremdkraft-Bremsanlage für Kraftfahrzeuge, bei der die Servokraft am Zuspannorgan über einen beim Durchströmen eines Regelventils mit einem Druckmittel erzeugten Staudruck aufgebracht wird, der durch Ansteuern des Regelventils mittels einer Betätigungseinrichtung definiert eingestellt werden kann.

Hydraulische Bremsanlagen für Kraftfahrzeuge werden heutzutage üblicherweise als Hilfskraft-Bremsanlage oder Fremdkraft-Bremsanlage ausgeführt. Bei einer Hilfskraft-Bremsanlage geht die zur Erzeugung der Bremskraft benötigte Energie von der physischen Kraft des Fahrzeugführers und einer oder mehreren Energieversorgungseinrichtungen aus, d.h. beim Bremsvorgang wird ein Teil der Bremskraft über einen mit einem manuell betätigbaren Bremspedal verbundenen Geberzylinder direkt an den Zuspannorganen aufgebracht, während der andere Teil der Bremskraft als Servokraft von beispielsweise einer Hydraulikpumpe aufgebracht wird. Im Gegensatz dazu geht bei einer Fremdkraft-Bremsanlage die zur Erzeugung der Bremskraft benötigte Energie von einer oder mehreren Energieversorgungseinrichtungen, ausgenommen der physischen Kraft des Fahrzeugführers, aus, d.h. der mit dem Bremspedal verbundene Geberzylinder dient nicht einer direkten Aufbringung der Bremskraft an den Zuspannorganen, sondern lediglich der Ansteuerung der an den Zuspannorganen angreifenden Servokraft.

Aus der DE-AS 1 134 904 ist ein Bremskraftverstärker für eine Fremdkraft-Bremsanlage bekannt, bei der die Servokraft über ein Druckumlaufsystem erzeugt wird. Dazu hat der Bremskraftverstärker eine an den Ausgang einer Hydraulikpumpe angeschlossene Druckkammer, die mit den Zuspannorganen verbunden ist, und eine an einen Vorratsbehälter angeschlossene Ablaufkammer, die über ein Drosselventil mit der Druckkammer verbunden ist. Das Drosselventil weist einen Ventilkörper auf, der zusammen mit einer im Bremskraftverstärker ortsfest angeordneten Buchse den Ventilspalt des Drosselventils begrenzt und mit dem Bremspedal verbunden ist, so daß der Ventilspalt des Drosselventils in Abhängigkeit von der Stellung des Bremspedals verstellbar ist, um einen zum Hub des Bremspedals proportionalen Staudruck in der Druckkammer zu erzeugen. Der Staudruck wird über einen in der Druckkammer geführten Kolben mit einer Durchflußöffnung den Zuspannorganen zugeführt.

Bei Ausfall der Hydraulikpumpe ist zur Erzeugung der erforderlichen Restbremskraft eine mechanische Ansteuerung des Bremskreises möglich, wozu ein weiteres Ventilelement vorgesehen ist, das mit dem Ventilkörper zur Anlage gebracht werden kann, wenn dieser soweit in die Buchse verschoben wurde, daß das Drosselventil verschlossen ist. Das weitere Ventilelement ist nun über den Ventilkörper gegen die Kraft einer Rückstellfeder in Richtung auf den in der Druckkammer geführten Kolben verschiebbar, um die Durchflußöffnung in dem Kolben zu verschließen, so daß die Zuspannorgane über den Kolben ansteuerbar sind.

Neben dem Nachteil, daß die Integration der Restbremsfunktion in dem Bremskraftverstärker gemäß diesem Stand der Technik mit einer hohen Anzahl von Bauteilen und einem großen Bauraum vorrichtungstechnisch relativ aufwendig gelöst ist, besteht hier das Problem, daß bei Ausfall der Servokraft der relativ große Hub des Drosselventils erst überfahren werden muß, um den Bremskreis zur Erzeugung der erforderlichen Restbremskraft mechanisch anzusteuern, so daß die Bremse bei Ausfall der Servokraft ungewohnt spät anspricht, was zu gefahrenträchtigen Situationen führen kann.

Derartige Bremskraftverstärker, die mit einem Drosselventil nach dem Staudruckprinzip arbeiten, sind gemäß der DE-PS 1 180 259 auch für Hilfskraft-Bremsanlagen bekannt. Der in der DE-PS 1 180 259 offenbarte Bremskraftverstärker unterscheidet sich von dem oben beschriebenen Bremskraftverstärker im wesentlichen dadurch, daß der in der Druckkammer angeordnete Kolben von dem mit dem Bremspedal verbundenen Ventilkörper auch im normalen Bremsbetrieb mechanisch beaufschlagt wird, während anstelle des weiteren Ventilelements ein Rückschlagventil in der Durchflußöffnung des Kolbens angeordnet ist, das entgegen der Betätigungsrichtung des Ventilkörpers in seine geschlossene Stellung vorgespannt ist und dem Druckmittel den Weg nur in Richtung auf die Zuspannorgane freigibt.

Ferner ist ein zusätzlicher Druckraum mit einem darin aufgenommenen weiteren Kolben vorgesehen, der zwischen dem Ventilkörper des Drosselventils und dem Kolben in der Druckkammer angeordnet ist, um eine dem Staudruck proportionale Reaktionskraft am Ventilkörper und somit am Bremspedal aufzubringen. Diese Rückmeldung des am Drosselventil anliegenden Staudrucks zum Bremspedal hin ist notwendig, um eine gefühlvolle Betätigung des Bremspedals unter Berücksichtigung des jeweils in den Zuspannorganen herrschenden Bremsdrucks zu ermöglichen.

Obgleich bei diesem Stand der Technik durch direkte mechanische Beaufschlagung des Kolbens in der Druckkammer auch bei Ausfall der Servokraft ein sofortiges Ansprechen der Bremse gewährleistet wird, ist ein Nachteil dieses Bremskraftverstärkers darin zu sehen, daß bei der gewählten direkten mechanischen Beaufschlagung des Kolbens die Rückmeldung des am Drosselventil anliegenden Staudrucks zum Bremspedal hin einen relativ großen vorrichtungstechnischen Aufwand, d.h. eine große Anzahl von Bauteilen sowie ventilseitig einen großen Bauraum erfordert. Zudem ist bei Betätigung des Bremspedals die Masse des weiteren Kolbens mit zu bewegen und die Reibkraft zwischen dem weiteren Kolben und der Innenwandung des zusätzlichen Druckraums zu überwinden, was bei Ausfall der Servokraft die zur Erzeugung der erforderlichen Restbremskraft am Bremspedal benötigte Betätigungskraft zusätzlich erhöht.

Desweiteren zeigt die DE-PS 1 037 287 einen Bremskraftverstärker für eine Fremdkraft-Bremsanlage, bei der der Bremskreis vom Servokreis getrennt ist. Auch dieser Stand der Technik arbeitet mit einem Drosselventil nach dem Staudruckprinzip. Durch die Ablaufkammer dieses Bremskraftverstärkers erstreckt sich ein Ventilkörper hindurch, dessen eines Ende von dem mit dem Bremspedal verbundenen Geberzylinder hydraulisch ansteuerbar ist, und dessen anderes Ende in die Druckkammer des Servokreises hineinragt. Der Ventilkörper ist am in die Druckkammer des Servokreises hineinragenden Ende mit einer mittigen Sackbohrung versehen, an deren Grund eine Querbohrung angebracht ist, um die Druckkammer des Servokreises mit der Ablaufkammer zu verbinden. Das in die Druckkammer des Servokreises hineinragende Ende des Ventilkörpers bildet mit dem Boden eines konzentrisch zum Ventilkörper angeordneten Plungerkolbens, der sich abgedichtet durch eine Trennwand zwischen der Druckkammer des Servokreises und der Druckkammer des Bremskreises hindurch erstreckt, das Drosselventil aus.

Obgleich dieser Stand der Technik den Vorteil hat, daß durch Trennung des Servokreises von dem Bremskreis eine bereits im Kraftfahrzeug vorhandene Servoquelle mit beispielsweise einem anderen Betriebsmedium für den Servokreis genutzt werden kann, bestehen hier Probleme hinsichtlich der wegabhängigen Steuerung des Ventilspalts des Drosselventils. Einerseits ist die geberzylinderseitige hydraulische Wirkfläche des Ventilkörpers zu klein, um bei Ausfall der Servokraft die erforderliche Restbremskraft mit angemessener Betätigungskraft am Bremspedal über den Geberzylinder hydraulisch aufzubringen. Andererseits ist die geberzylinderseitige hydraulische Wirkfläche des Ventilkörpers so groß, daß sie im normalen Bremsbetrieb einen großen Druckmittelbedarf bzw. Hub am Geberzylinder mit entsprechend hoher Betätigungskraft am Bremspedal erfordert, um den Ventilspalt des Drosselventils und somit die Servokraft einzustellen. Auch führt während des normalen Bremsbetriebs der sich bei Verschiebung des Ventilkörpers durch Druckbeaufschlagung über den Geberzylinder zum Plungerkolben hin am Ventilspalt des Drosselventils einstellende Regelvorgang dazu, daß das mit der Betätigungskraft beaufschlagte Bremspedal nachgibt, was auch als Weglaufen des Bremspedals bezeichnet wird. Im Ergebnis ist festzuhalten, daß sowohl bei normalem Bremsbetrieb mit Servounterstützung als auch bei Ausfall der Servokraft der in den Zuspannorganen wirkende Bremsdruck nicht hinreichend feinfühlig über das Bremspedal eingestellt werden kann, so daß ein gutes Betätigungs- bzw. Pedalgefühl nicht gegeben ist.

Ferner sind beispielsweise aus der DE 39 05 044 A1 oder der DE 43 22 292 A1 Druckmodulatoren für Hilfskraft- oder Fremdkraft-Bremsanlagen bekannt, mittels derer zur Aufbringung einer betätigungskraftproportionalen Servokraft der Druck einer Hydraulikpumpe nach dem Reaktionsdruckprinzip regelbar ist. Ein solcher Druckmodulator ist in den Servokreis der Bremsanlage geschaltet und weist ein Ventilgehäuse auf, in dem ein Ventilkolben gleitbeweglich angeordnet ist. Die eine Seite des Ventilkolbens begrenzt eine Steuerkammer, die mit dem an das Bremspedal angeschlossenen Geberzylinder hydraulisch verbunden ist, während die andere Seite des Ventilkolbens eine Druckkammer begrenzt. Die Druckkammer ist über eine Druckleitung an eine Hydraulikpumpe angeschlossen und hat einen Auslaß, der mit einem Vorratsbehälter verbunden ist und mittels einer am Ventilkolben angeformten Sitzfläche verschlossen werden kann. Die die Druckkammer mit der Hydraulikpumpe verbindende Druckleitung weist einen Abzweig auf, der im Falle der DE 39 05 044 A1 hydraulisch mit den Zuspannorganen verbunden ist oder im Falle der DE 43 22 292 A1 zu einem Bremskraftverstärker führt.

Im Betrieb einer derartig aufgebauten Bremsanlage wird mit Betätigen des Bremspedals in der Steuerkammer des Druckmodulators ein Druck erzeugt, der den Ventilkolben verschiebt, so daß die Sitzfläche des Ventilkolbens den Auslaß der Druckkammer verschließt. Dies hat zur Folge, daß am Ausgang der Hydraulikpumpe ein Druck aufgebaut wird, der über den Abzweig auch an den Zuspannorganen bzw. im Bremskraftverstärker wirkt. Sobald der Druck am Ausgang der Hydraulikpumpe und somit in der Druckkammer des Druckmodulators dem Druck in der Steuerkammer entspricht, wird der Ventilkolben vom Auslaß der Druckkammer zurückgedrängt, so daß überschüssiges Druckmittel in den Vorratsbehälter gefördert wird. Es stellt sich ein Regelvorgang ein, der den Druck am Ausgang der Hydraulikpumpe in Abhängigkeit vom Druck in der Steuerkammer bestimmt.

Ein Nachteil dieses Stands der Technik ist darin zu sehen, daß im Falle der DE 39 05 044 A1 die Regelung des Servodrucks mittels des Druckmodulators durch Verschiebung des Ventilkolbens vom Auslaß der Druckkammer weg unter Verkleinerung des Volumens der Steuerkammer auf den Geberzylinder zurückwirkt, so daß Regelungsdruckstöße am Bremspedal zu verspüren sind, bzw. im Falle der DE 43 22 292 A1 die Rückwirkungsfreiheit des Regelvorgangs im Druckmodulator mit großem technischen Aufwand unter Zuhilfenahme einer Sperrkammer im Bremskraftverstärker und weiteren Ventilen gewährleistet werden muß.

Schließlich ist beispielsweise aus der DE 36 03 074 C2 oder der DE 37 02 573 A1 die Verwendung elektromagnetisch angesteuerter Kugelsitzventile in Druckmodulatoren für hydraulische Bremsanlagen mit Antiblockiersystem (ABS) prinzipiell bekannt. Bei diesen Druckmodulatoren arbeitet das Kugelsitzventil als Schaltventil, dessen Ventilkugel mittelbar über einen elektromagnetisch verstellbaren Druckentlastungskolben des Druckmodulators oder unmittelbar durch einen eigens dafür vorgesehenen Elektromagneten verschoben werden kann, um die Verbindung zwischen dem Geberzylinder und dem Radbremszylinder zu unterbrechen, so daß während des ABS-Betriebs der Bremsdruck im Radbremszylinder über den Druckentlastungskolben unabhängig vom Druck im Geberzylinder regelbar ist.

Zusammenfassend ist festzuhalten, daß die bekannten Hilfskraft- oder Fremdkraft-Bremsanlagen, bei denen die Servokraft über eine Hydraulikpumpe nach dem Stau- bzw. Reaktionsdruckprinzip erzeugt wird, im Hinblick auf eine befriedigende Rückmeldung des in den Zuspannorganen anstehenden Bremsdrucks an das Bremspedal, einem angemessenen Betätigungskraftbedarf am Bremspedal bei ausreichender Bremskraft an den Zuspannorganen sowie rückwirkungsfreie Regelungsvorgänge im Servokreis verbesserungsbedürftig sind.

Gegenüber dem oben beschriebenen Stand der Technik liegt der Erfindung daher die Aufgabe zugrunde, eine einfach aufgebaute hydraulische Hilfskraft- bzw. Fremdkraft-Bremsanlage zu schaffen, mittels derer sowohl im normalen Bremsbetrieb als auch bei Ausfall der Servokraft eine ausreichende Bremskraft an den Zuspannorganen bei gutem Pedalgefühl aufgebracht werden kann.

Diese Aufgabe wird durch die im Patentanspruch 1 angegebenen Merkmale gelöst. Vorteilhafte Weiterbildungen der Erfindung sind Gegenstand der Patentansprüche 2 bis 10.

Erfindungsgemäß hat eine hydraulische Bremsanlage einen an eine Betätigungseinrichtung angeschlossenen Geberzylinder, der zwei Druckkammern aufweist, von denen die erste Druckkammer der hydraulischen Ansteuerung eines in einem Servokraft-Bremsbetrieb von einem Druckmittel zwangsdurchströmten Drosselventils dient, um dessen Drosselquerschnitt zur Erzeugung eines definierten Staudrucks einzustellen, welcher zur Aufbringung einer Bremskraft einer im Servokraft-Bremsbetrieb hydraulisch mit dem Drosselventil verbundenen Kolben-Zylinder-Anordnung eines Zuspannorgans anliegt, die mit einer Servodruckkammer einer Trennkolben-Zylinder-Anordnung hydraulisch verbunden ist, während die zweite Druckkammer des Geberzylinders mit einer von der Servodruckkammer durch einen Trennkolben hydraulisch getrennten Betätigungsdruckkammer der Trennkolben-Zylinder-Anordnung hydraulisch verbindbar ist, so daß bei Ausfall der Servokraft über den Trennkolben am Zuspannorgan eine Bremskraft aufgebracht werden kann.

Durch die erfindungsgemäß vorgesehene funktionale Trennung des Servokreises von dem manuell ansteuerbaren Bremskreis mit der Kombination aus einer Kolben-Zylinder-Anordnung im Zuspannorgan und einer zusätzlichen bzw. separaten Trennkolben-Zylinder-Anordnung sowie der hydraulischen Ansteuerung des Drosselventils zur Erzeugung des Staudrucks unter Zwangsdurchströmung des Drosselquerschnitts wird sowohl im Servokraft-Bremsbetrieb als auch bei Ausfall der Servokraft eine ausreichende Bremskraft am Zuspannorgan aufgebracht und eine angemessene Rückmeldung der Bremskräfte an die Betätigungseinrichtung bewirkt, so daß stets ein gutes Betätigungs- bzw. Pedalgefühl gegeben ist.

Die wie oben beschrieben ausgebildete hydraulische Bremsanlage hat insbesondere den Vorteil großer räumlicher Flexibilität, d.h. die einzelnen Bauelemente, wie das Drosselventil, die Hydraulikpumpe oder die Trennkolben-Zylinder-Anordnung, sind nicht an eine bestimmte Position im Kraftfahrzeug, z.B. am Bremspedal, gebunden, sondern können auch an einer anderen Stelle im Kraftfahrzeug angeordnet werden. Auch können zur Erfüllung weiterer Funktionen wie Antiblockierregelung (ABS), Antischlupfregelung (ASR) oder Fahrdynamikregelung weitere Bauelemente leicht mit in die funktional gegliederte hydraulische Bremsanlage integriert werden. Schließlich sinkt gegenüber dem eingangs geschilderten Stand der Technik der vorrichtungstechnische Aufwand insgesamt, da aufgrund der oben angesprochenen funktionalen Trennung die einzelnen Bauelemente zur Erfüllung nur weniger Funktionen einfacher ausgebildet werden können.

Die erfindungsgemäße Ausbildung der hydraulischen Bremsanlage eignet sich insbesondere für die Umrüstung bestehender Bremsanlagen, da herkömmliche einkammerige Bremssättel sowie Radbremszylinder von Trommelbremsen hydraulisch angesteuert werden können. Auch ist eine doppelte Verlegung der Druckleitungen für jeweils einen Bremssattel nicht notwendig, so daß diese Bremsanlage vorrichtungstechnisch besonders einfach ausgebildet ist. Schließlich kann eine Umschaltung vom Servokraft-Bremsbetrieb auf den Hilfs- bzw. Notbetrieb der Bremsanlage durch die Trennkolben-Zylinder-Anordnung in Abhängigkeit von den hydraulischen Wirkflächenverhältnissen am Trennkolben in vorteilhafter Weise automatisch erfolgen und durch die Bewegung des Trennkolbens z.B. durch einen Wegschalter erkannt und dem Fahrer gemeldet werden.

Die in den Patentansprüchen 7, 8 und 10 angegebenen Merkmale schaffen ein Baukastensystem, mittels dessen die erfindungsgemäße hydraulische Bremsanlage auf einfache Weise um ABS, ASR und/oder eine Fahrdynamikregelung erweitert werden kann, wobei die zusätzlichen Regelungen im ABS-Regelfall im wesentlichen rückwirkungsfrei durchgeführt werden können, so daß auch dann ein gutes Pedalgefühl gewährleistet bleibt. Insbesondere die im Patentanspruch 8 angegebene hydraulische Bremsanlage mit ABS ist vorteilhaft einfach ausgebildet, da kein Entlastungsventil zur funktionalen Trennung des manuell ansteuerbaren Bremskreises vom Fremdkraft-Bremskreis im antiblockiergeregelten Betrieb vorgesehen werden muß. Diese Funktion wird vielmehr von der Trennkolben-Zylinder-Anordnung in der angegebenen Verschaltung mit erfüllt.

Die Patentansprüche 2 bis 5 geben vorteilhafte Ausbildungen der Trennkolben-Zylinder-Anordnung an.

Weist gemäß dem Patentanspruch 6 die Trennkolben-Zylinder-Anordnung einen Sensor auf, kann durch Sensieren der Trennkolbenbewegung auf einfache Weise festgestellt werden, ob die hydraulische Bremsanlage auf Notbetrieb umschaltet. Das vom Sensor abgegebene Signal kann dann beispielsweise zur Anzeige des Betriebszustands der hydraulischen Bremsanlage verwendet werden.

Gemäß dem Patentanspruch 9 ist das Drosselventil vorteilhaft als Kugelsitzventil ausgebildet, so daß sich der Drosselquerschnitt zur Erzeugung eines definierten Staudrucks zuverlässig und präzise einstellen läßt. Ferner ist der Einsatz eines Kugelsitzventils kostengünstig.

Die Erfindung wird nachstehend anhand bevorzugter Ausführungsbeispiele unter Bezugnahme auf die Zeichnung näher erläutert, wobei gleiche oder ähnliche Teile mit gleichen Bezugszeichen versehen sind. Dabei zeigen:
Die Fig. 1 eine prinzipielle Darstellung eines ersten Ausführungsbeispiels einer Bremsanlage, die nicht von der Lehre des Patentanspruchs 1 Gebrauch macht und als Hilfskraft-Bremsanlage ausgeführt ist, mit paralleler Anordnung von zwei Kolben-Zylinder-Anordnungen im Bremssattel,
die Fig. 2 eine teilweise geschnittene Ansicht eines bevorzugten Bremssattels für die Bremsanlage gemäß Fig. 1, mit einem Ringkolben, der sowohl den Kolben der einen Kolben-Zylinder-Anordnung als auch den Zylinder der anderen Kolben-Zylinder-Anordnung ausbildet,
die Fig. 3 eine prinzipielle Darstellung eines zweiten Ausführungsbeispiels einer Bremsanlage, die nicht von der Lehre des Patentanspruchs 1 Gebrauch macht und gegenüber dem ersten Ausführungsbeispiel zusätzliche Bauelemente für eine Antiblockierregelung (ABS) aufweist,
die Fig. 4 eine prinzipielle Darstellung eines dritten Ausführungsbeispiels einer Bremsanlage, die nicht von der Lehre des Patentanspruchs 1 Gebrauch macht und gegenüber dem ersten bzw. zweiten Ausführungsbeispiel zusätzliche Bauelemente für eine Antischlupfregelung (ASR) und eine Fahrdynamikregelung aufweist,
die Fig. 5 eine prinzipielle Darstellung eines vierten Ausführungsbeispiels einer Bremsanlage, die gemäß der Erfindung und als Fremdkraft-Bremsanlage ausgeführt ist, mit einer Trennkolben-Zylinder-Anordnung zwischen einem manuell ansteuerbaren Bremskreis und einem Servokreis sowie nur einer Kolben-Zylinder-Anordnung im Bremssattel,
die Fig. 6A eine Schnittansicht einer ersten Variante der in Fig. 5 dargestellten Trennkolben-Zylinder-Anordnung,
die Fig. 6B eine Schnittansicht einer zweiten Variante der in Fig. 5 dargestellten Trennkolben-Zylinder-Anordnung,
die Fig. 7 eine prinzipielle Darstellung eines fünften Ausführungsbeispiels einer Bremsanlage, die erfindungsgemäß ausgebildet ist und gegenüber dem vierten Ausführungsbeispiel zusätzliche Bauelemente für eine Antiblockierregelung (ABS) aufweist,
die Fig. 8 eine prinzipielle Darstellung einer ersten Variante des fünften Ausführungsbeispiels und
die Fig. 9 eine prinzipielle Darstellung einer zweiten Variante des fünften Ausführungsbeispiels.

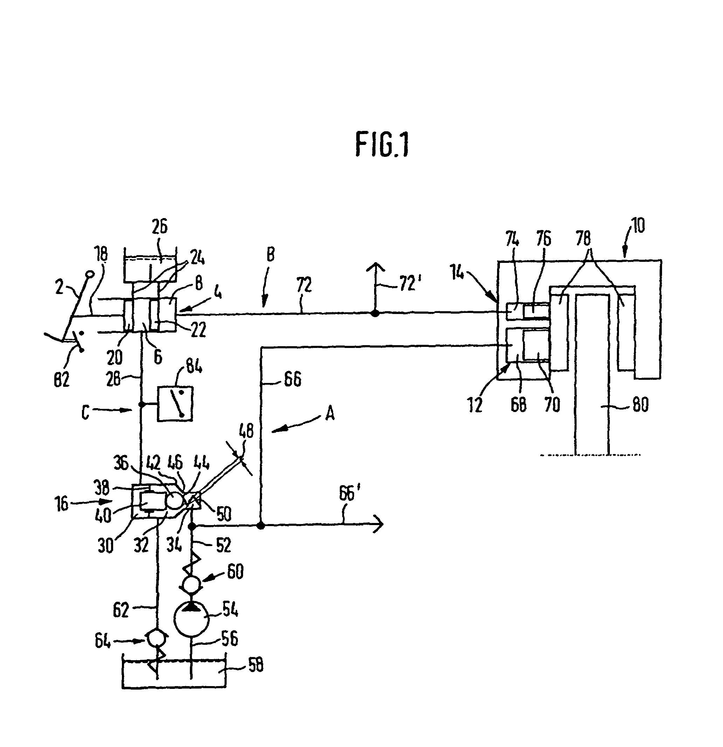

Gemäß der Fig. 1 hat eine hydraulische Hilfskraft-Bremsanlage ein als Betätigungseinrichtung dienendes Bremspedal 2, das an einen Geberzylinder 4, beispielsweise einen Tandem-Hauptzylinder, angeschlossen ist, der zwei Druckkammern 6, 8 aufweist. Ferner ist ein als Zuspannorgan dienender Bremssattel 10 vorgesehen, der mit zwei Kolben-Zylinder-Anordnungen 12, 14 versehen ist. Die erste Druckkammer 6 des Geberzylinders 4 dient der hydraulischen Ansteuerung eines Drosselventils 16, das im servounterstützten Bremsbetrieb von einem Druckmittel zwangsdurchströmt wird und mit der ersten Kolben-Zylinder-Anordnung 12 des Bremssattels 10 hydraulisch verbunden ist. Über die erste Druckkammer 6 des Geberzylinders 4 kann der Drosselquerschnitt des Drosselventils 16 zur Erzeugung eines definierten Staudrucks hydraulisch eingestellt werden, welcher der ersten Kolben-Zylinder-Anordnung 12 des Bremssattels 10 zur Aufbringung einer Bremskraft anliegt. Die zweite Druckkammer 8 des Geberzylinders 4 ist mit der zweiten Kolben-Zylinder-Anordnung 14 des Bremssattels 10 hydraulisch verbunden, so daß am Bremssattel 10 eine Bremskraft auch bei Ausfall der Servounterstützung aufgebracht werden kann.

Das Bremspedal 2 ist über eine Kolbenstange 18 mit einem ersten Kolben 20 des Geberzylinders 4 wirkverbunden, der die erste Druckkammer 6 bremspedalseitig hydraulisch begrenzt. Zwischen der ersten Druckkammer 6 und der zweiten Druckkammer 8 ist ein zweiter Kolben 22 angeordnet, der die erste und die zweite Druckkammer 6, 8 hydraulisch voneinander trennt. Die erste und die zweite Druckkammer 6, 8 sind jeweils über einen Anschluß 24 mit einem Ausgleichsbehälter 26 verbunden.

Die erste Druckkammer 6 des Geberzylinders 4 ist über eine Steuerleitung 28 mit einer Steuerkammer 30 des Drosselventils 16 verbunden, welches als dreikammeriges 2/2 Kugelsitzventil mit hydraulischer Ansteuerung ausgebildet ist, das neben der Steuerkammer 30 eine Ablaufkammer 32 und eine Druckkammer 34 aufweist. In der Ablaufkammer 32 ist ein Ventilkörper 36 in Form einer metallischen Kugel angeordnet, der über einen sich abgedichtet durch eine Wandung 38 zwischen der Steuerkammer 30 und der Ablaufkammer 32 hindurch erstreckenden, axial verschiebbaren Steuerkolben 40 mechanisch mit einer Kraft beaufschlagt werden kann. Der Ventilkörper 36 kann über den Steuerkolben 40 nur mit einer Druckkraft beaufschlagt werden, da es sich bei dem Ventilkörper 36 und dem Steuerkolben 40 um zwei separate Bauteile handelt. In einer Wandung 42 zwischen der Ablaufkammer 32 und der Druckkammer 34 ist eine Durchgangsbohrung 44 vorgesehen, die die Ablaufkammer 32 und die Druckkammer 34 hydraulisch miteinander verbindet. An der Durchgangsbohrung 44 ist ablaufkammerseitig ein ringförmiger Dichtsitz 46 angebracht, der zusammen mit dem Ventilkörper 36 einen Ventilspalt 48 begrenzt, dessen Durchflußquerschnitt dem Drosselquerschnitt des Drosselventils 16 entspricht. In der Druckkammer 34 ist eine Rückstellfeder 50 angeordnet, die sich durch die Durchgangsbohrung 44 hindurch erstreckt und den Ventilkörper 36 gegen den Steuerkolben 40 drückt. Liegt in der Steuerkammer 30 kein Steuerdruck an, so wird der Steuerkolben 40 durch die Rückstellfeder 50 über den Ventilkörper 36 in seiner Ausgangsstellung gehalten, wobei der Ventilspalt 48 maximal geöffnet ist (Durchgangs-Null-Stellung des Drosselventils 16).

Die Druckkammer 34 des Drosselventils 16 ist über eine Druckleitung 52 hydraulisch an den Ausgang einer Hydraulikpumpe 54 angeschlossen, deren Eingang über eine Ansaugleitung 56 mit einem Vorratsbehälter 58 für das Druckmittel, vorzugsweise Bremsflüssigkeit, verbunden ist. In die Druckleitung 52 ist ein Rückschlagventil 60 geschaltet, das in Richtung auf die Hydraulikpumpe 54 vorgespannt ist. Die Ablaufkammer 32 des Drosselventils 16 ist über eine Rücklaufleitung 62 mit dem Vorratsbehälter 58 verbunden. In die Rücklaufleitung 62 ist ein Druckhalteventil 64 geschaltet, das in Richtung auf die Ablaufkammer 32 vorgespannt ist.

Von der Druckleitung 52 zweigt zwischen dem Rückschlagventil 60 und der Druckkammer 34 des Drosselventils 16 eine Druckleitung 66 ab, die an die Druckkammer 68 der ersten Kolben-Zylinder-Anordnung 12 des Bremssattels 10 angeschlossen ist, so daß der Kolben 70 der ersten Kolben-Zylinder-Anordnung 12 mit dem mittels der Hydraulikpumpe 54 erzeugten und über das Drosselventil 16 gesteuerten Staudruck beaufschlagt werden kann.

Die zweite Druckkammer 8 des Geberzylinders 4 ist über eine Druckleitung 72 direkt an die Druckkammer 74 der zweiten Kolben-Zylinder-Anordnung 14 des Bremssattels 10 angeschlossen, so daß der Kolben 76 der zweiten Kolben-Zylinder-Anordnung 14 mit dem durch Niederdrücken des Bremspedals 2 über den zweiten Kolben 22 des Geberzylinders 4 in der zweiten Druckkammer 8 erzeugten Druck beaufschlagt werden kann.

Der Bremssattel 10, im dargestellten Fall ein Schwimmsattel, ist mit Bremsbelägen 78 versehen, die in an sich bekannter Weise bei Druckbeaufschlagung der ersten bzw. zweiten Kolben-Zylinder-Anordnung 12, 14 durch den Kolben 70 der ersten Kolben-Zylinder-Anordnung 12 bzw. den Kolben 76 der zweiten Kolben-Zylinder-Anordnung 14 gegen eine Bremsscheibe 80 gepreßt werden. Im dargestellten Fall sind die erste und die zweite Kolben-Zylinder-Anordnung 12, 14 nebeneinander bzw. parallel zueinander angeordnet, sie können aber auch beispielsweise konzentrisch oder auf bezüglich der Bremsscheibe 80 gegenüberliegenden Seiten des Bremssattels 10 angeordnet werden.

Schließlich ist ein über das Bremspedal 2 mechanisch betätigbarer Pedalschalter 82 und/oder ein in die Steuerleitung 28 geschalteter elektro-hydraulischer Druckschalter 84 vorgesehen, deren Funktion im folgenden noch erläutert wird.

Im Ergebnis bilden die Hydraulikpumpe 54, die Druckleitung 52, das über die Rücklaufleitung 62 an den Vorratsbehälter 58 angeschlossene Drosselventil 16, die Druckleitung 66 und die erste Kolben-Zylinder-Anordnung 12 des Bremssattels 10 einen Fremdkraft-Bremskreis A aus, der über einen hydraulisch davon getrennten Steuerkreis C angesteuert wird, welcher aus dem Kolben 20 des Geberzylinders 4, der ersten Druckkammer 6 des Geberzylinders 4, der Steuerleitung 28, der Steuerkammer 30 des Drosselventils 16 und dem Steuerkolben 40 des Drosselventils 16 besteht, während der zweite Kolben 22 des Geberzylinders 4, die zweite Druckkammer 8 des Geberzylinders 4, die Druckleitung 72 und die zweite Kolben-Zylinder-Anordnung 14 des Bremssattels 10 einen unabhängig vom Fremdkraft-Bremskreis A über das Bremspedal 2 manuell ansteuerbaren Bremskreis B ausbildet.

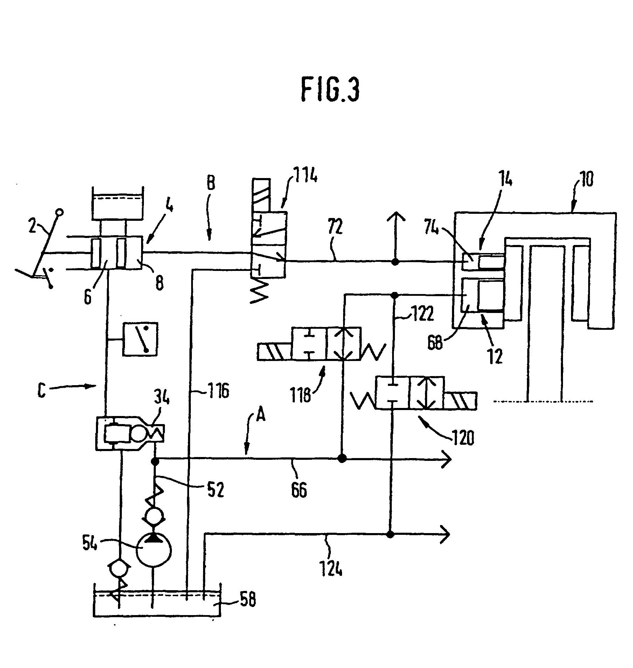

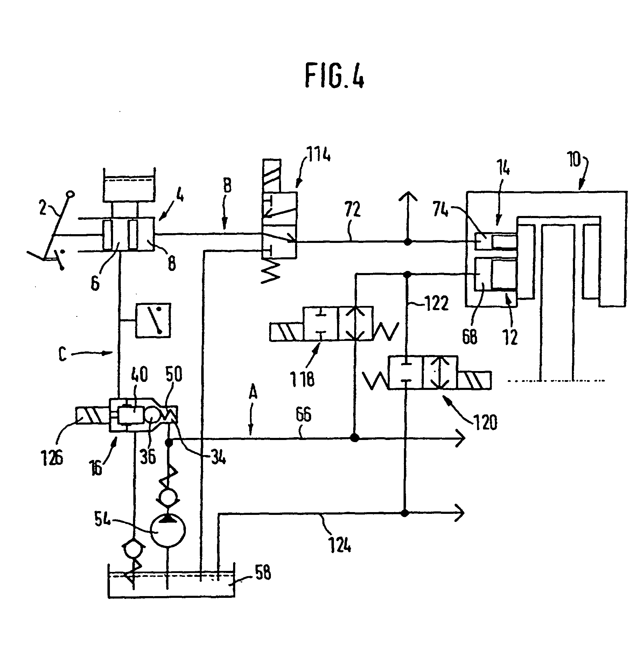

An dieser Stelle bleibt anzumerken, daß in Fig. 1 der Einfachheit halber lediglich eine Grundausführung der Hilfskraft-Bremsanlage mit einem Bremssattel 10 für ein Rad dargestellt ist. Die Kolben-Zylinder-Anordnungen weiterer Bremssättel werden über den Abzweig 66' von der Druckleitung 66, die die Druckleitung 52 zwischen Hydraulikpumpe 54 und Druckkammer 34 des Drosselventils 16 mit der ersten Kolben-Zylinder-Anordnung 12 im Bremssattel 10 verbindet, bzw. über den Abzweig 72' von der Druckleitung 72 zwischen zweiter Druckkammer 8 des Geberzylinders 4 und zweiter Kolben-Zylinder-Anordnung 14 des Bremssattels 10 entsprechend angeschlossen. Dabei ist es beispielsweise denkbar, daß bei einem vierrädrigem Kraftfahrzeug von vier Bremssätteln lediglich zwei Bremssättel jeweils mit zwei Kolben-Zylinder-Anordnungen versehen sind, die über den Fremdkraft-Bremskreis A bzw. den Bremskreis B wie oben beschrieben beaufschlagt werden, während die anderen zwei Bremssättel jeweils nur eine Kolben-Zylinder-Anordnung aufweisen, die über den Fremdkraft-Bremskreis A beaufschlagt wird. Andere Kombinationen sind entsprechend den jeweiligen Erfordernissen ebenfalls möglich. Entsprechendes gilt auch für die in den Fig. 3 und 4 dargestellten Ausführungsbeispiele.

Im folgenden wird die Funktionsweise des ersten Ausführungsbeispiels beschrieben.

Durch Niederdrücken des Bremspedals 2 werden die Kolben 20, 22 des Geberzylinders 4 in den Druckkammern 6, 8 in Fig. 1 nach rechts verschoben und verschließen die Anschlüsse 24 zum Ausgleichsbehälter 26, so daß sich in den Druckkammern 6, 8 ein Druck einstellt, der zu der auf das Bremspedal 2 wirkenden Betätigungskraft proportional ist. Dieser Druck steht nun im Steuerkreis C für den Fremdkraft-Bremskreis A über die Steuerleitung 28 in der Steuerkammer 30 des Drosselventils 16 als Steuerdruck an. Im Bremskreis B liegt dieser Druck über die Druckleitung 72 in der Druckkammer 74 der zweiten Kolben-Zylinder-Anordnung 14 des Bremssattels 10 an.

Im Steuerkreis C verschiebt der in der Steuerkammer 30 des Drosselventils 16 anliegende Steuerdruck den Steuerkolben 40 in Fig. 1 nach rechts und damit den am Steuerkolben 40 durch die Kraft der Rückstellfeder 50 anliegenden Ventilkörper 36 in Richtung auf den Dichtsitz 46. Gleichzeitig wird die Hydraulikpumpe 54 über den durch das Bremspedal 2 betätigten Pedalschalter 82 bzw. mit Überschreiten eines vorbestimmten Signaldrucks im Steuerkreis C über den elektro-hydraulischen Druckschalter 84 gestartet, wozu der Pedalschalter 82 bzw. der elektro-hydraulische Druckschalter 84 ein elektrisches Signal liefert, das einen mit der Hydraulikpumpe 54 antriebsverbundenen Elektromotor (nicht dargestellt) startet oder eine elektromagnetische Kupplung (nicht dargestellt) einkuppelt, die die Hydraulikpumpe 54 mit einer drehenden Welle des Motors oder eines Rads des Kraftfahrzeugs verbindet. Ebenso könnte die Hydraulikpumpe 54 aber auch während der gesamten Gebrauchsdauer des Kraftfahrzeugs betrieben werden.

Die Hydraulikpumpe 54 saugt nun über die Ansaugleitung 56 das Druckmittel aus dem Vorratsbehälter 58 an und fördert es über das Rückschlagventil 60 und die Druckleitung 52 in die Druckkammer 34 des Drosselventils 16. Von der Druckkammer 34 fließt das Druckmittel durch den Ventilspalt 48 in die Ablaufkammer 32 und von da über die Rücklaufleitung 62 sowie das Druckhalteventil 64 zurück in den Vorratsbehälter 58. Da zu Beginn der Betätigung des Bremspedals 2 der Steuerkolben 40 des Drosselventils 16 und somit der Ventilkörper 36 nur geringfügig in Richtung auf den Dichtsitz 46 verschoben sind, so daß der Ventilspalt 48 fast vollständig geöffnet ist, wälzt die Hydraulikpumpe 54 das Druckmittel weitgehend drucklos über das Drosselventil 16 um.

Der Ventilkörper 36 wird nun über den hydraulisch beaufschlagten Steuerkolben 40 entgegen der Kraft der Rückstellfeder 50 weiter in Richtung des Dichtsitzes 46 geschoben, und zwar mit einer Kraft, die gleich dem Produkt des in der Steuerkammer 30 durch den Geberzylinder 4 aufgebrachten Steuerdrucks und der hydraulischen Wirkfläche des Steuerkolbens 40 ist. Bei Annäherung des Ventilkörpers 36 an den Dichtsitz 46 verringert sich der Ventilspalt 48, wodurch sich der Durchflußquerschnitt für das durch die Hydraulikpumpe 54 über die Druckleitung 52 und die Druckkammer 34 umgewälzte Druckmittel verringert. Im Ergebnis wird im Fremdkraft-Bremskreis A in Umlaufrichtung des Druckmittels vor dem Ventilspalt 48 ein Staudruck erzeugt, der sich über die Druckkammer 34, die Druckleitung 52 und die Druckleitung 66 bis zur Druckkammer 68 der ersten Kolben-Zylinder-Anordnung 12 des Bremssattels 10 fortpflanzt, so daß über den Kolben 70 der ersten Kolben-Zylinder-Anordnung 12 und die Bremsbeläge 78 eine Bremskraft an der Bremsscheibe 80 aufgebracht wird.

Der vor dem Ventilspalt 48 erzeugte Staudruck hängt im wesentlichen vom Volumenstrom der Hydraulikpumpe 54 und dem Durchflußwiderstand des Drosselventils 16 ab, ist aber in guter Näherung proportional zu dem in der Steuerkammer 30 des Drosselventils 16 anstehenden Steuerdruck. Der Proportionalitätsfaktor zwischen diesem Steuerdruck und dem vor dem Ventilspalt 48 erzeugten Staudruck ist bestimmt durch das Verhältnis der hydraulischen Wirkfläche des Steuerkolbens 40 in der Steuerkammer 30 zur effektiven hydraulischen Wirkfläche des Ventilkörpers 36 am Dichtsitz 46. Durch entsprechende Dimensionierung dieser Wirkflächen läßt sich einerseits die gewünschte Druckverstärkung im Fremdkraft-Bremskreis A einstellen. Andererseits kann die über die effektive hydraulische Wirkfläche des Ventilkörpers 36 durch den Staudruck am Ventilkörper 36 aufgebrachte Reaktionskraft derart eingestellt werden, daß über die Drucksäule des Steuerkreises C zwischen dem Steuerkolben 40 des Drosselventils 16 und dem ersten Kolben 20 des Geberzylinders 4 eine angemessene Rückmeldung des Staudrucks zum Bremspedal 2 hin erfolgt, um ein gutes Pedalgefühl zu gewährleisten und somit eine gefühlvolle Betätigung des Bremspedals 2 zu ermöglichen. Da der Ventilspalt 48 des Drosselventils 16 kontinuierlich verstellt und im servounterstützten Bremsbetrieb gegen den Staudruck nicht vollständig geschlossen wird, entstehen insbesondere keine Regelungsdruckstöße, die auf das Bremspedal 2 zurückwirken könnten.

Wie oben beschrieben liegt gleichzeitig im Bremskreis B der in der zweiten Druckkammer 8 des Geberzylinders 4 durch Niederdrücken des Bremspedals 2 erzeugte Druck in der Druckkammer 74 der zweiten Kolben-Zylinder-Anordnung 14 des Bremssattels 10 an. Dieser Druck bringt somit über den Kolben 76 der zweiten Kolben-Zylinder-Anordnung 14 und die Bremsbeläge 78 ebenfalls eine Bremskraft an der Bremsscheibe 80 auf. Die am Kolben 76 der zweiten Kolben-Zylinder-Anordnung 14 erzeugte Reaktionskraft wird über die Drucksäule zwischen dem Kolben 76 und dem zweiten Kolben 22 des Geberzylinders 4 sowie die Drucksäule zwischen dem zweiten Kolben 22 und dem ersten Kolben 20 des Geberzylinders 4 der Reaktionskraft im Steuerkreis C überlagert zum Bremspedal 2 zurückgemeldet, so daß eine gefühlvolle Betätigung des Bremspedals 2 unter Berücksichtigung des tatsächlich in dem Bremssattel 10 herrschenden Bremsdrucks möglich ist.

Aus der obigen Beschreibung wird deutlich, daß bei beispielsweise einem Ausfall der Hydraulikpumpe 54 oder Leckagen im Fremdkraft-Bremskreis A die erforderliche Restbremskraft manuell mit angemessener Rückmeldung an das Bremspedal 2 alleine über den vom Fremdkraft-Bremskreis A funktional entkoppelten Bremskreis B an der Bremsscheibe 80 aufgebracht werden kann.

Soll im servounterstützten Bremsbetrieb der Bremsdruck nun reduziert werden, so wird durch Entlasten des Bremspedals 2 der Steuerdruck im Steuerkreis C verringert und der Steuerkolben 40 des Drosselventils 16 fährt zusammen mit dem Ventilkörper 36 unter Vergrößerung des Ventilspalts 48 in seine Ausgangsstellung zurück, wobei er gegen den abbauenden Steuerdruck in der Steuerkammer 30 über den Ventilkörper 36 durch den mit Vergrößerung des Ventilspalts 48 kleiner werdenden Staudruck des umlaufenden Druckmittels in der Druckkammer 34 und die Kraft der Rückstellfeder 50 belastet wird. Mit Unterschreitung des vorbestimmten Signaldrucks im Steuerkreis C am elektro-hydraulischen Druckschalter 84 wird gegebenenfalls die Hydraulikpumpe 54 bzw. deren Antrieb abgeschaltet und somit der Umlauf des Druckmittels beendet. Im Bremskreis B verringert sich der Bremsdruck in der Druckkammer 74 der zweiten Kolben-Zylinder-Anordnung 14 natürlich ebenfalls durch Entlasten des Bremspedals 2.

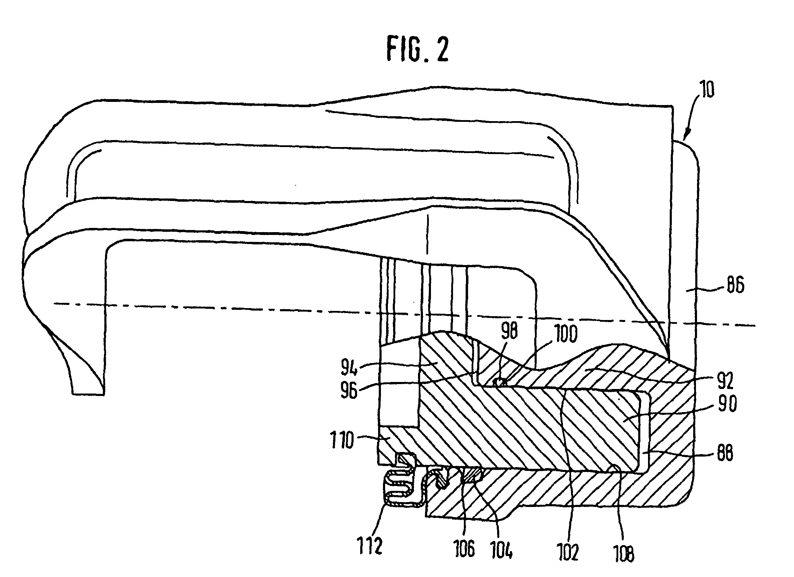

In der Fig. 2 ist ein Bremssattel 10 für die Bremsanlage mit bevorzugter Ausbildung der zwei Kolben-Zylinder-Anordnungen 12, 14 dargestellt, der gleichermaßen im ersten bis dritten Ausführungsbeispiel Verwendung finden kann.

Gemäß Fig. 2 ist in einem Gehäuse 86 des Bremssattels 10 eine Ringkammer 88 ausgebildet, in der ein topfförmiger Ringkolben 90 gleitbeweglich aufgenommen ist. Der Ringkolben 90 liegt an einem zylindrischen Zapfen 92 des Gehäuses 86 gleitbeweglich an, der mit dem Boden 94 des Ringkolbens 90 eine zylindrische Kammer 96 ausbildet. Sowohl die Ringkammer 88 als auch die zylindrische Kammer 96 sind jeweils mit einem Anschluß (nicht dargestellt) versehen, so daß sie an die Druckleitung 66 des Fremdkraft-Bremskreises A bzw. die Druckleitung 72 des Bremskreises B angeschlossen werden können.

Die zylindrische Kammer 96 ist gegenüber der Ringkammer 88 mittels eines Dichtelements 98 hydraulisch abgedichtet, das in einer Nut 100 in der Außenumfangsfläche 102 des Zapfens 92 aufgenommen ist, aber auch an der Innenumfangsfläche des Ringkolbens 90 befestigt sein könnte. Die Ringkammer 88 ist über ein Dichtelement 104 nach außen abgedichtet, das in einer Nut 106 in der Innenumfangsfläche 108 des Gehäuses 86 aufgenommen ist. Der Ringkolben 90 ist an seinem aus dem Gehäuse 86 hervorstehenden Endabschnitt 110 mit dem Gehäuse 86 über eine elastische Manschette 112 verbunden, die verhindert, daß Bremsstaub zwischen der Außenumfangsfläche des Ringkolbens 90 und der Innenumfangsfläche 108 des Gehäuses 86 eindringen kann. Der Ringkolben 90 wirkt in an sich bekannter Weise über seinen Endabschnitt 110 mit Bremsbelägen (nicht dargestellt) zusammen, um an einer Bremsscheibe (nicht dargestellt) eine Bremskraft aufzubringen.

Im Ergebnis bildet das Gehäuse 86 zusammen mit dem Ringkolben 90 die erste und zweite Kolben-Zylinder-Anordnung 12, 14 des Bremssattels 10 in sehr kompakter Bauweise aus, so daß der zweikammerige Bremssattel 10 nicht mehr Bauraum erfordert als ein herkömmlicher einkammeriger Bremssattel. In Abhängigkeit von der Auslegung der Hilfskraft-Bremsanlage ist dabei entweder die Ringkammer 88 oder die zylindrische Kammer 96 über die Druckleitung 66 mit dem Fremdkraft-Bremskreis A verbunden, während die jeweils andere Kammer über die Druckleitung 72 an den Bremskreis B angeschlossen ist.

Gemäß dem in Fig. 3 dargestellten zweiten Ausführungsbeispiel ist die Hilfskraft-Bremsanlage nach Fig. 1 mit weiteren Bauelementen versehen, um eine Antiblockierregelung (ABS) zu ermöglichen. Den Teilen in Fig. 1 entsprechende Teile sind mit den gleichen Bezugszeichen versehen und werden im folgenden nicht nochmals erläutert. Die Fig. 3 zeigt die Hilfskraft-Bremsanlage mit ABS im unbetätigten Zustand.

Eine Antiblockierregelung bewirkt prinzipiell, daß, wenn eine bestimmte Verzögerungsschwelle an einem gebremsten Rad überschritten wird, der Radbremsdruck soweit verringert wird, bis eine zweite Verzögerungsschwelle an diesem Rad unterschritten wird. Hierfür kann es notwendig sein, den anstehenden Radbremsdruck bis auf Null abzubauen. Danach wird der Radbremsdruck wieder erhöht, bis entweder das betreffende Rad erneut überbremst wird oder der vom Fahrer vorgegebene Bremsdruck erreicht wird.

Daher ist gemäß Fig. 3 der manuell angesteuerte Bremskreis B mit einem Entlastungsventil 114, im dargestellten Fall ein elektromagnetisch betätigbares 3/2 Wegeventil, versehen, das in die Druckleitung 72 zwischen Geberzylinder 4 und zweiter Kolben-Zylinder-Anordnung 14 des Bremssattels 10 geschaltet und über eine Entlastungsleitung 116 mit dem Vorratsbehälter 58 verbunden ist. Das nur einmal im System vorhandene Entlastungsventil 114 verbindet wahlweise die Druckkammer 74 der zweiten Kolben-Zylinder-Anordnung 14 mit der zweiten Druckkammer 8 des Geberzylinders 4 oder mit dem Vorratsbehälter 58, und ist in seiner die Druckkammer 74 der zweiten Kolben-Zylinder-Anordnung 14 mit der zweiten Druckkammer 8 des Geberzylinders 4 verbindenden Stellung vorgespannt.

Der Fremdkraft-Bremskreis A ist für jedes zu regelnde Rad mit zwei Schaltventilen 118, 120, im dargestellten Fall elektromagnetisch betätigbare 2/2 Wegeventile mit Durchgangs- und Sperrstellung, versehen. Das erste Schaltventil 118 ist in die Druckleitung 66 zur ersten Kolben-Zylinder-Anordnung 12 des Bremssattels 10 geschaltet und derart vorgespannt, daß es in seiner Grundstellung die Druckleitung 52 zwischen der Hydraulikpumpe 54 und der Druckkammer 34 des Drosselventil 16 mit der Druckkammer 68 der ersten Kolben-Zylinder-Anordnung 12 verbindet. Zwischen dem ersten Schaltventil 118 und der Druckkammer 68 der ersten Kolben-Zylinder-Anordnung 12 zweigt eine Leitung 122 ab, die in einer mit dem Vorratsbehälter 58 verbundenen Sammelrücklaufleitung 124 mündet oder direkt mit dem Vorratsbehälter 58 verbunden ist. Das zweite Schaltventil 120 ist in die Leitung 122 geschaltet und in seine Schließstellung vorgespannt.

Wird im ABS-Betrieb der hydraulischen Hilfskraft-Bremsanlage eine Bremsung über das Bremspedal 2 eingeleitet, erkennt eine Sensorik (nicht dargestellt), daß der über den Fremdkraft-Bremskreis A bzw. den Bremskreis B im Bremssattel 10 anliegende Bremsdruck das gebremste Rad (nicht dargestellt) zum Blockieren bringt. Der Bremsdruck wird nun durch elektromagnetische Ansteuerung der Ventile 114, 118 und 120 geeignet eingestellt. Dazu wird das Entlastungsventil 114 in seine die Druckkammer 74 der zweiten Kolben-Zylinder-Anordnung 14 mit dem Vorratsbehälter 58 verbindende Stellung geschaltet, so daß der anstehende Druck zwischen der zweiten Druckkammer 8 des Geberzylinders 4 und dem Entlastungsventil 114 eingeschlossen wird, während der Bremsdruck in der Druckkammer 74 der zweiten Kolben-Zylinder-Anordnung 14 über die Entlastungsleitung 116 zum Vorratsbehälter 58 hin auf Null abgebaut wird.

Im Fremdkraft-Bremskreis A wird der in der Druckkammer 68 der ersten Kolben-Zylinder-Anordnung 12 anstehende Bremsdruck durch Schalten der Schaltventile 118, 120 reduziert, wobei durch Schalten des ersten Schaltventils 118 von seiner Durchgangsstellung in seine Sperrstellung der über die Hydraulikpumpe 54 und das Drosselventil 16 erzeugte Staudruck gegenüber der Druckkammer 68 der ersten Kolben-Zylinder-Anordnung 12 abgesperrt wird, während durch Schalten des zweiten Schaltventils 120 von seiner Sperrstellung in seine Durchgangsstellung die Druckkammer 68 der ersten Kolben-Zylinder-Anordnung 12 mit dem Vorratsbehälter 58 verbunden wird. Im Ergebnis wird der Bremsdruck in der Druckkammer 68 der ersten Kolben-Zylinder-Anordnung 12 zum Vorratsbehälter 54 hin abgebaut bis die Verzögerungsschwelle unterschritten wird, so daß das ursprünglich blockierte Rad wieder dreht.

Dreht das ursprünglich blockierte Rad wieder, wird die elektromagnetische Ansteuerung der Ventile 114, 118 und 120 unterbrochen, so daß die Ventile 114, 118 und 120 jeweils in ihre vorgespannte Grundstellung zurückkehren und im Bremssattel 10 wie unter Bezugnahme auf die Fig. 1 beschrieben durch den Fremdkraft-Bremskreis A und den Bremskreis B eine der Betätigungskraft proportionale Bremskraft aufgebracht wird. Es stellt sich ein Regelvorgang ein, der während der antiblockiergeregelten Bremsung andauert, wobei durch den beschriebenen Aufbau der Hilfskraft-Bremsanlage mit den Ventilen 114, 118 und 120 keine nennenswerten Regelungsdruckstöße auf das Bremspedal 2 zurückwirken. Insbesondere wird unabhängig von der Schaltstellung der Schaltventile 118 und 120 im Fremdkraft-Bremskreis A der Staudruck erzeugt, der somit unverändert über den Steuerkreis C an das Bremspedal 2 zurückgemeldet wird, so daß auch im ABS-Betrieb der Hilfskraft-Bremsanlage ein gutes Pedalgefühl gewährleistet ist.

Gemäß dem in Fig. 4 dargestellten dritten Ausführungsbeispiel ist die Hilfskraft-Bremsanlage nach Fig. 1 bzw. Fig. 3 mit weiteren Bauelementen versehen, um eine Antischlupfregelung (ASR) und eine Fahrdynamikregelung zu ermöglichen. Den Teilen in den Fig. 1 und 3 entsprechende Teile sind mit den gleichen Bezugszeichen versehen und werden im folgenden nicht nochmals erläutert. Die Fig. 4 zeigt die Hilfskraft-Bremsanlage mit ASR bzw. Fahrdynamikregelung im unbetätigten Zustand.

Eine Antischlupfregelung bewirkt prinzipiell, daß, wenn beispielsweise beim Anfahren eines Kraftfahrzeugs die Reibbeiwerte eines angetriebenen Rads zum Untergrund zu gering sind, also eine Beschleunigungsschwelle überschritten wird, dieses Rad solange angebremst wird, bis eine zweite Beschleunigungsschwelle unterschritten wird, so daß sich das Rad wieder in einem zulässigen Schlupfbereich bewegt. Bei einer Fahrdynamikregelung hingegen, die prinzipiell auf die Erhaltung der Längsstabilität des Kraftfahrzeugs, meßbar über den Gierwinkel zwischen der Längsachse des Kraftfahrzeugs und der momentanen Fahrtrichtung, abstellt, werden in kritischen Fahrzuständen, wie beispielsweise Untersteuern, Übersteuern oder Bremsen während schneller Kurvenfahrt, die auftretenden Giermomente, die zu einem Ausbrechen oder Schleudern des Kraftfahrzeugs führen können, u.a. durch Anbremsen eines oder mehrerer Räder korrigiert.

Für eine derartige Regelung muß somit die Modulation des Bremsdrucks an einzelnen Rädern möglich sein. Dies wird mit Hilfe der vorstehend beschriebenen Ventile 118 und 120, die für jedes Rad vorgesehen sind, sowie eine zusätzliche elektromagnetische Ansteuerung des Drosselventils 16 gewährleistet. Zur elektromagnetischen Ansteuerung des Drosselventils 16 weist dieses einen Elektromagneten 126 auf, der unabhängig von der Betätigung des Bremspedals 2 angesteuert werden kann. Der Elektromagnet 126 ist mit dem Steuerkolben 40 des Drosselventils 16 wirkverbunden, so daß der Steuerkolben 40 durch Ansteuerung des Elektromagneten 126 axial definiert verschoben werden kann, wofür der Elektromagnet 126 als Proportionalmagnet mit entsprechender Strom-Kraft-Charakteristik ausgeführt ist. Über den Elektromagneten 126 kann der Steuerkolben 40 somit kraftabhängig steuerbar verschoben werden, wobei sich der Ventilspalt 48 des Drosselventils 16 bei Strombeaufschlagung des Elektromagneten 126 bzw. Krafterhöhung verkleinert und bei Wegnahme des Stroms durch die Kraft der Rückstellfeder 50 des Drosselventils 16 sowie den am Ventilkörper 36 wirkenden Staudruck vergrößert.

Im Ergebnis ist es möglich, mit entsprechender Sensorik bereits eingeleiteten Über- oder Falschreaktionen des Fahrers beim Führen des Kraftfahrzeugs selbsttätig entgegenzuwirken, bevor der Fahrer den kritischen Zustand des Kraftfahrzeugs wahrgenommen hat und das Bremspedal 2 betätigt. Es versteht sich von selbst, daß bei den hier angesprochenen Bremssituationen mit Antischlupf- bzw. Fahrdynamikregelung, bei welchen der Fahrer nicht aktiv beteiligt ist, im Bremskreis B kein Druck aufgebaut wird, weshalb das Entlastungsventil 114 nicht angesteuert werden muß und in seiner Grundstellung verbleibt.

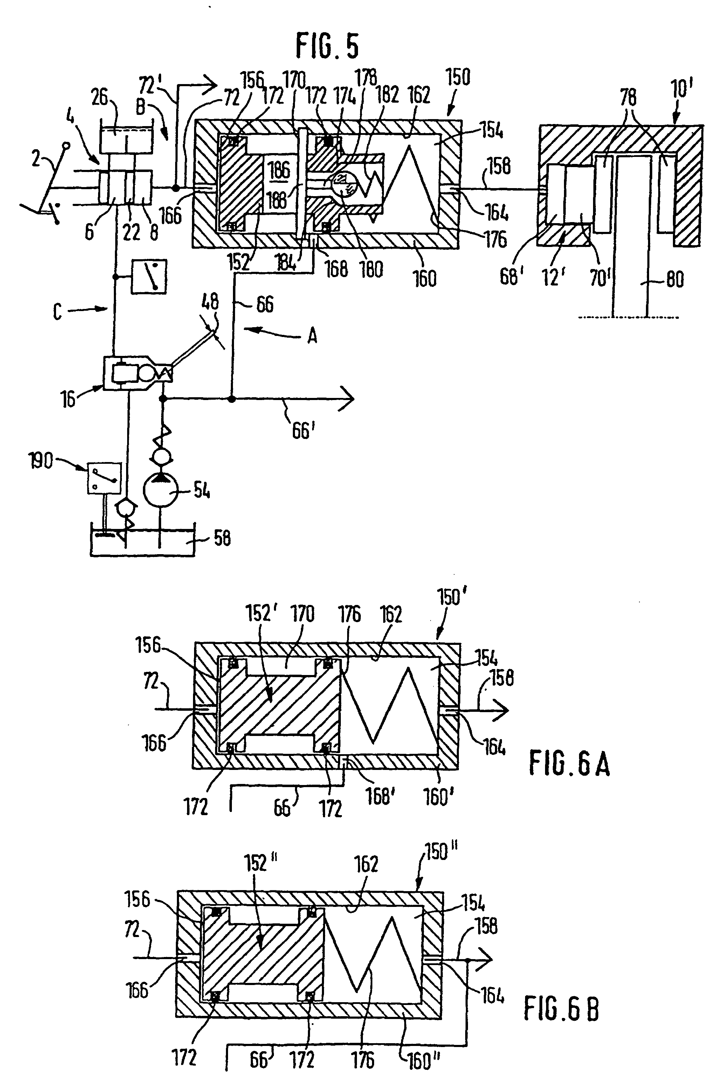

Gemäß dem in Fig. 5 dargestellten vierten Ausführungsbeispiel ist die Bremsanlage als Fremdkraft-Bremsanlage ausgeführt. Den Teilen in Fig. 1 entsprechende Teile sind mit den gleichen Bezugszeichen versehen und werden im folgenden nicht nochmals erläutert. Die Fig. 5 zeigt die Fremdkraft-Bremsanlage im unbetätigten Zustand.

Auch die Fremdkraft-Bremsanlage gemäß Fig. 5 weist den an das Bremspedal 2 angeschlossenen Geberzylinder 4 mit zwei Druckkammern 6, 8 auf, von denen die erste Druckkammer 6 der hydraulischen Ansteuerung des im Servokraft-Bremsbetrieb vom Druckmittel zwangsdurchströmten Drosselventils 16 dient, um dessen Drosselquerschnitt bzw. Ventilspalt 48 zur Erzeugung eines definierten Staudrucks einzustellen. Der Steuerkreis C entspricht somit hinsichtlich Aufbau und Funktion dem der vorhergehend beschriebenen Ausführungsbeispiele und braucht deshalb nicht nochmals detailliert beschrieben werden.

Der im Drosselventil 16 erzeugte Staudruck liegt zur Aufbringung einer Bremskraft einer im Servokraft-Bremsbetrieb hydraulisch mit dem Drosselventil 16 verbundenen Kolben-Zylinder-Anordnung 12' eines Zuspannorgans in Form eines Bremssattels 10' an, welcher im Gegensatz zu den vorhergehend beschriebenen Ausführungsbeispielen nur eine Kolben-Zylinder-Anordnung 12' aufweist. Der Bremssattel 10', im dargestellten Fall ein Schwimmsattel, ist wie bei den vorhergehend beschriebenen Ausführungsbeispielen mit Bremsbelägen 78 versehen, die in an sich bekannter Weise bei Druckbeaufschlagung der Druckkammer 68' der Kolben-Zylinder-Anordnung 12' durch deren Kolben 70' gegen die Bremsscheibe 80 gepreßt werden.

Desweiteren ist zwischen der Druckleitung 66 des Fremdkraft-Bremskreises A und der Druckleitung 72 des Bremskreises B eine zusätzliche Trennkolben-Zylinder-Anordnung 150 vorgesehen, deren Trennkolben 152 eine in Fig. 5 rechts vom Trennkolben 152 liegende Servodruckkammer 154 von einer in Fig. 5 links vom Trennkolben 152 liegenden Betätigungsdruckkammer 156 hydraulisch trennt. Die Servodruckkammer 154 ist mit der Kolben-Zylinder-Anordnung 12' des Bremssattels 10' über eine Druckleitung 158 hydraulisch verbunden, während die Betätigungsdruckkammer 156 über die Druckleitung 72 an die zweite Druckkammer 8 des Geberzylinders 4 hydraulisch angeschlossen ist, so daß auch bei Ausfall des Fremdkraft-Bremskreises A durch den in der Druckleitung 72 des Bremskreises B und somit in der Betätigungsdruckkammer 156 der Trennkolben-Zylinder-Anordnung 150 anstehenden hydraulischen Druck über den Trennkolben 152 am Bremssattel 10' eine Bremskraft für eine Hilfsbremsung aufgebracht werden kann, wie noch näher beschrieben wird.

Die Trennkolben-Zylinder-Anordnung 150 hat im einzelnen ein vorzugsweise zylindrisches Gehäuse 160, mit einer Zylinderbohrung 162, in der der zweiseitig beaufschlagbare Trennkolben 152 längsverschieblich aufgenommen ist. An der in Fig. 5 rechten Stirnseite des Gehäuses 160 ist ein Anschluß 164 für die zur Kolben-Zylinder-Anordnung 12' führende Druckleitung 158 vorgesehen und an der in Fig. 5 linken Stirnseite des Gehäuses 160 ist ein Anschluß 166 für die zum Geberzylinder 4 führende Druckleitung 72 ausgebildet, während am Umfang des Gehäuses 160 in etwa mittig ein Anschluß 168 für die zum Drosselventil 16 führende Druckleitung 66 vorgesehen ist.

Der Trennkolben 152 hat einen in axialer Richtung in etwa mittig liegenden Abschnitt verminderten Durchmessers, der mit der Zylinderbohrung 162 und den zu beiden Seiten des mittigen Abschnitts liegenden Abschnitten größeren Durchmessers des Trennkolbens 152 eine weitere Druckkammer 170 begrenzt. Die weitere Druckkammer 170 ist in Fig. 5 nach rechts bzw. links mittels in Umfangsnuten der Abschnitte größeren Durchmessers des Trennkolbens 152 vorgesehenen Dichtelementen 172, wie O-Ringen, von der Servodruckkammer 154 bzw. der Betätigungsdruckkammer 156 hydraulisch getrennt.

Desweiteren weist der Trennkolben 152 ein in der Bremshydraulik an sich bekanntes Zentralventil 174 auf und ist mittels einer in der Servodruckkammer 154 aufgenommenen Rückstellfeder 176 in die Betätigungsdruckkammer 156 hinein vorgespannt. Das zentrische Zentralventil 174 hat einen mit einem Ventilstößel 178 verbundenen Ventildichtkörper 180, der mittels einer Ventilfeder 182 gegen einen am Trennkolben 152 angearbeiteten Dichtsitz 184 in Richtung auf die Betätigungsdruckkammer 156 vorgespannt ist. Schließlich ist der Trennkolben 152 mit einer Aussparung 186 versehen, die von einem an der inneren Umfangswand des Gehäuses 160 befestigten Anschlag 188 durchgriffen wird.

In der in Fig. 5 dargestellten Ausgangsstellung des Trennkolbens 152 ist dieser durch die Kraft der Rückstellfeder 176 gegen den Anschlag 188 vorgespannt. Gleichzeitig liegt der Ventilstößel 178 an dem Anschlag 188 an, wodurch der Ventildichtkörper 180 über den Ventilstößel 178 gegen die Kraft der Ventilfeder 182 von dem Dichtsitz 184 am Trennkolben 152 beabstandet gehalten wird, so daß das Zentralventil 174 geöffnet ist.

Im Ergebnis ist die weitere Druckkammer 170 der Trennkolben-Zylinder-Anordnung 150 mit deren Servodruckkammer 154 über das geöffnete Zentralventil 174 hydraulisch verbunden, so daß im Betrieb der in der Druckleitung 66 anstehende Servodruck im Fremdkraft-Bremskreis A über die weitere Druckkammer 170 der Trennkolben-Zylinder-Anordnung 150, das geöffnete Zentralventil 174, die Servodruckkammer 154 und die Druckleitung 158 an der Kolben-Zylinder-Anordnung 12' des Bremssattels 10' anliegt, während im Bremskreis B der zweite Kolben 22 des Geberzylinders 4 über die zweite Druckkammer 8 des Geberzylinders 4, die Druckleitung 72 und die Betätigungsdruckkammer 156 der Trennkolben-Zylinder-Anordnung 150 mit dem Trennkolben 152 hydraulisch wirkverbunden ist.

An dieser Stelle bleibt anzumerken, daß in Fig. 5 der Einfachheit halber lediglich eine Grundausführung der Fremdkraft-Bremsanlage mit einem Bremssattel 10' für ein Rad dargestellt ist. Weitere Bremssättel werden über die Abzweige 66', 72' von den Druckleitungen 66, 72 entsprechend angeschlossen, wobei jedem Bremssattel eine Trennkolben-Zylinder-Anordnung zugeordnet ist. Gleichermaßen können anstelle der Bremssättel den jeweiligen Anforderungen entsprechend auch die Radbremszylinder herkömmlicher Trommelbremsen mittels der Bremsanlage hydraulisch angesteuert werden.

Im folgenden wird die Funktionsweise des vierten Ausführungsbeispiels beschrieben, soweit sie sich von der des unter Bezugnahme auf die Fig. 1 beschriebenen ersten Ausführungsbeispiels unterscheidet.

Im normalen Bremsbetrieb, d.h. im Servokraft-Bremsbetrieb, wird der Ventilspalt 48 des Drosselventils 16 über den Steuerkreis C wie unter Bezugnahme auf die Fig. 1 beschrieben in Abhängigkeit von dem in der ersten Druckkammer 6 des Geberzylinders 4 bei Niedertreten des Bremspedals 2 erzeugten Druck eingestellt. Der bei laufender Hydraulikpumpe 54 durch Zwangsdurchströmen des Ventilspalts 48 im Drosselventil 16 erzeugte Staudruck liegt über die Druckleitung 66 des Fremdkraft-Bremskreises A, den Anschluß 168 der Trennkolben-Zylinder-Anordnung 150, die weitere Druckkammer 170, das geöffnete Zentralventil 174, die Servodruckkammer 154, den Anschluß 164 und die Druckleitung 158 in der Kolben-Zylinder-Anordnung 12' des Bremssattels 10' an.

Im wesentlichen gleichzeitig oder mit geringfügiger Zeitverzögerung liegt der in der zweiten Druckkammer 8 des Geberzylinders 4 erzeugte Druck über die Druckleitung 72 des Bremskreises B sowie den Anschluß 166 der Trennkolben-Zylinder-Anordnung 150 in deren Betätigungsdruckkammer 156 an.

Der Trennkolben 152 verbleibt dabei bedingt durch die im wesentlichen gleichzeitige Druckbeaufschlagung der Druckleitungen 66, 72 bzw. den im Bremskreis B im Vergleich zum Fremdkraft-Bremskreis A hinterherlaufenden Druckaufbau in seiner in Fig. 5 dargestellten Grundstellung am Anschlag 188. Voraussetzung dafür ist allerdings, daß die hydraulischen Wirkflächen des Trennkolbens 152 und/oder das Betriebsdruckniveau im Steuerkreis C bzw. Bremskreis B im Vergleich zu dem des Fremdkraft-Bremskreises A derart gewählt sind, das sich die am Trennkolben 152 wirkenden Kräfte gegeneinander aufheben bzw. die resultierende Kraft in Richtung der Betätigungsdruckkammer 156 wirkt, wobei kleinere Differenzen durch die Vorspannkraft der Rückstellfeder 176 ausgeglichen werden.

Im Ergebnis wird über die Kolben-Zylinder-Anordnung 12' des Bremssattels 10' die Bremskraft an der Bremsscheibe 80 alleine durch den im Drosselventil 16 erzeugten Staudruck aufgebracht, wobei über die Drucksäule des Steuerkreises C zwischen dem Drosselventil 16 und dem Geberzylinder 4 eine angemessene Rückmeldung des Staudrucks zum Bremspedal 2 hin erfolgt, die eine gefühlvolle Betätigung des Bremspedals 2 erlaubt.

Wird im Fremdkraft-Bremskreis A die Druckleitung 66 infolge eines Ausfalls der Hydraulikpumpe 54 oder der Trennkolben-Zylinder-Anordnung 150 vorgelagerter Leckagen im Fremdkraft-Bremskreis A bzw. Steuerkreis C drucklos, so verschiebt der bei niedergetretenem Bremspedal 2 in der Betätigungsdruckkammer 156 anstehende Druck den Trennkolben 152 entgegen der Kraft der Rückstellfeder 176 aus seiner Grundstellung weg vom Anschlag 188 in die Servodruckkammer 154 hinein. Dabei löst sich der Ventilstößel 178 vom Anschlag 188, so daß der Ventildichtkörper 180 durch die Ventilfeder 182 gegen den Dichtsitz 184 gedrückt wird. Demgemäß trennt das nunmehr geschlossene Zentralventil 174 die weitere Druckkammer 170 von der Servodruckkammer 154 hydraulisch ab. Gleichzeitig baut sich in der Servodruckkammer 154 infolge der Verschiebung des Trennkolbens 152 der erforderliche Hilfsbremsdruck auf, der über den Anschluß 164 und die Druckleitung 158 an der Kolben-Zylinder-Anordnung 12' des Bremssattels 10' anliegt, um für die Hilfsbremsung eine Bremskraft an der Bremsscheibe 80 aufzubringen. Bei weiterer Verschiebung des Trennkolbens 152 in Fig. 5 nach rechts schlägt der Trennkolben 152 am Ende der Aussparung 186 an dem Anschlag 188 an, der somit den Hilfsbremsdruck auf einen maximalen Wert begrenzt und verhindert, daß das Zentralventil 174 auf den Boden des Gehäuses 160 auffährt.

Die bei der Hilfsbremsung am Kolben 70' der Kolben-Zylinder-Anordnung 12' des Bremssattels 10' erzeugte Reaktionskraft wird über die Drucksäule zwischen dem Kolben 70' und dem Trennkolben 152 sowie die Drucksäule zwischen dem Trennkolben 152 und dem zweiten Kolben 22 des Geberzylinders 4 zum Bremspedal 2 zurückgemeldet, so daß auch bei der Hilfsbremsung eine gefühlvolle Betätigung des Bremspedals 2 unter Berücksichtigung des tatsächlich in dem Bremssattel 10' herrschenden Bremsdrucks möglich ist.

Gemäß Fig. 5 ist der vom Ausgleichsbehälter 26 des Geberzylinders 4 getrennte Vorratsbehälter 58 für das Druckmittel vorzugsweise mit einer Füllstandsüberwachung 190 versehen, die mit der Steuerung des Antriebs der Hydraulikpumpe 54, wie ein Elektromotor oder eine elektromagnetische Kupplung, verschaltet ist (nicht dargestellt). Kommt es zu einem mechanisch bedingten Druckausfall, beispielsweise durch Bersten der Druckleitung 66 oder der Druckleitung 158, wird die bei laufender Hydraulikpumpe 54 verursachte Abnahme des Druckmittels im Vorratsbehälter 58 von der Füllstandsüberwachung 190 erfaßt. In Abhängigkeit von einem durch die Füllstandsüberwachung 190 erzeugten Füllstandssignal wird dann der Antrieb der Hydraulikpumpe 54 abgestellt, um ein Leerpumpen des Vorratsbehälters 58 zu verhindern. Obgleich bei Bersten der Druckleitung 158 der betroffene Bremssattel 10' und auf jeden Fall der Servodruck durch Abschalten des Antriebs für die Hydraulikpumpe 54 insgesamt ausfällt, kann eine Hilfsbremsung über den Bremskreis B durch die weiteren funktionstüchtigen Zuspannorgane (nicht dargestellt), d.h. die Bremssättel bzw. Radbremszylinder, die über den Abzweig 72' angeschlossen sind, erfolgen. Dabei wird der Bremskreis B ebenso wie der Steuerkreis C zweckmäßig über den am Geberzylinder 4 vorgesehenen Ausgleichsbehälter 26 unabhängig vom Vorratsbehälter 58 mit Druckmittel versorgt.

In der Fig. 6A ist eine erste Variante 150' der unter Bezugnahme auf die Fig. 5 beschriebenen Trennkolben-Zylinder-Anordnung 150 dargestellt, die anstelle der Trennkolben-Zylinder-Anordnung 150 gemäß Fig. 5 eingesetzt werden kann.

Die Trennkolben-Zylinder-Anordnung 150' gemäß Fig. 6A unterscheidet sich von der in Fig. 5 dargestellten Trennkolben-Zylinder-Anordnung 150 dadurch, daß im Trennkolben 152' kein Zentralventil vorgesehen ist, so daß die Trennkolben-Zylinder-Anordnung 150' kostengünstiger ausgebildet werden kann. Dafür ist der Anschluß 168' in der Umfangswand des Gehäuses 160' derart angebracht, daß bei mittels der Rückstellfeder 176 in Grundstellung vorgespanntem Trennkolben 152' die Druckleitung 66 mit der Servodruckkammer 154 direkt hydraulisch verbunden ist.

Fällt wie oben beschrieben der Servodruck in der Druckleitung 66 unbeabsichtigt ab, so verschiebt der bei niedergetretenem Bremspedal 2 in der Betätigungsdruckkammer 156 anstehende Druck den Trennkolben 152' in Fig. 6A nach rechts, wodurch das der Betätigungsdruckkammer 156 zugewandte Dichtelement 172 den Anschluß 168' überfährt, so daß die Druckleitung 66 mit der weiteren Druckkammer 170 am Trennkolben 152' verbunden wird. Bei weiterer Verschiebung des Trennkolbens 152' in Fig. 6A nach rechts wird wie oben beschrieben in der Kolben-Zylinder-Anordnung 12' des Bremssattels 10' ein Bremsdruck für die Hilfsbremsung aufgebaut.

Die Fig. 6B zeigt eine wirtschaftliche zweite Variante 150'' der unter Bezugnahme auf die Fig. 5 beschriebenen Trennkolben-Zylinder-Anordnung 150, die anstelle der Trennkolben-Zylinder-Anordnung 150 bzw. 150' eingesetzt werden kann.

Die Trennkolben-Zylinder-Anordnung 150'' gemäß Fig. 6B weist ebenfalls kein Zentralventil im Trennkolben 152'' auf und unterscheidet sich ansonsten von der in Fig. 6A dargestellten Trennkolben-Zylinder-Anordnung 150' dadurch, daß in der Umfangswand des Gehäuses 160'' kein Anschluß für die Druckleitung 66 vorgesehen ist und der Trennkolben 152'' ohne weitere Druckkammer ausgebildet werden kann. Bei dieser Variante wird die Druckleitung 66 direkt an die Druckleitung 158 angeschlossen. Da demgemäß die Trennkolben-Zylinder-Anordnung 150'' die Druckleitung 66 nicht von der Druckleitung 158 trennen kann, kann bei Druckmittelverlust in dem Fremdkraft-Bremskreis A keine Hilfsbremsung über den der Trennkolben-Zylinder-Anordnung 150'' zugeordneten Bremssattel 10' erfolgen, vielmehr muß eine Hilfsbremsung über den Bremskreis B durch die weiteren funktionstüchtigen Zuspannorgane, die über den Abzweig 72' angeschlossen sind, erfolgen. Bei Ausfall des Steuerkreises C oder der Hydraulikpumpe 54 ohne Druckmittelverlust im Fremdkraft-Bremskreis A ist eine Hilfsbremsung jedoch wie oben beschrieben über die Trennkolben-Zylinder-Anordnung 150" möglich.

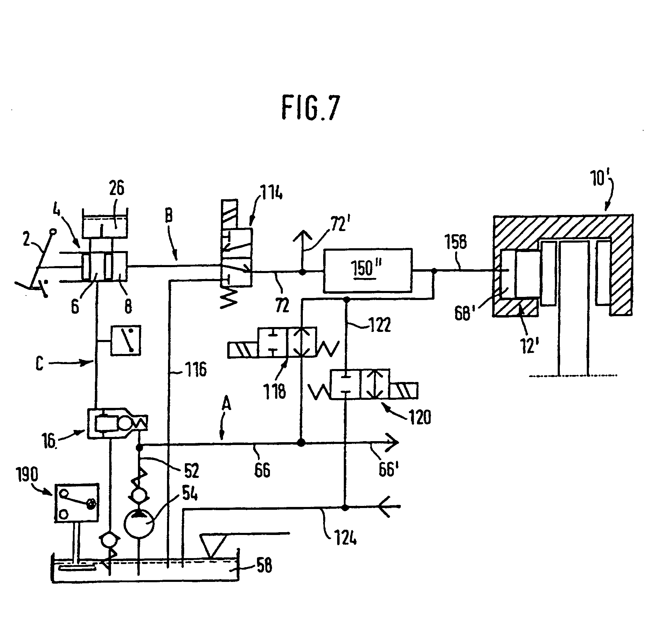

Gemäß dem in Fig. 7 dargestellten fünften Ausführungsbeispiel ist die Fremdkraft-Bremsanlage nach Fig. 5 mit weiteren Bauelementen versehen, um eine Antiblockierregelung (ABS) zu ermöglichen. Den Teilen in den Fig. 1, 3 und 5 entsprechende Teile sind mit den gleichen Bezugszahlen versehen und werden im folgenden nicht nochmals erläutert. Die Fig. 7 zeigt die Fremdkraft-Bremsanlage mit ABS im unbetätigten Zustand.

Ebenso wie das zweite Ausführungsbeispiel ist gemäß Fig. 7 das fünfte Ausführungsbeispiel mit einem Entlastungsventil 114 im Bremskreis B versehen, das in die Druckleitung 72 zwischen dem Geberzylinder 4 und der Trennkolben-Zylinder-Anordnung 150'' geschaltet und über eine Entlastungsleitung 116 mit dem Vorratsbehälter 58 verbunden ist. Auch hier ist das Entlastungsventil 114 insgesamt nur einmal in der Bremsanlage vorhanden. Das Entlastungsventil 114 verbindet wahlweise die Betätigungsdruckkammer 156 der Trennkolben-Zylinder-Anordnung 150'' mit der zweiten Druckkammer 8 des Geberzylinders 4 oder mit dem Vorratsbehälter 58, wobei es in seiner die Betätigungsdruckkammer 156 der Trennkolben-Zylinder-Anordnung 150'' mit der zweiten Druckkammer 8 des Geberzylinders 4 verbindenden Stellung vorgespannt ist.

Der Fremdkraft-Bremskreis A ist desweiteren für jedes zu regelnde Rad wie im zweiten Ausführungsbeispiel mit zwei Schaltventilen 118, 120 versehen. Das erste Schaltventil 118 ist in die Druckleitung 66 zur Kolben-Zylinder-Anordnung 12' des Bremssattels 10' geschaltet und derart vorgespannt, daß es in seiner Grundstellung die Druckleitung 52 zwischen der Hydraulikpumpe 54 und dem Drosselventil 16 mit der Druckleitung 158 zwischen der Trennkolben-Zylinder-Anordnung 150'' und der Kolben-Zylinder-Anordnung 12' des Bremssattels 10' verbindet. Zwischen dem ersten Schaltventil 118 und der Druckleitung 158 zweigt eine Leitung 122 ab, die in einer mit dem Vorratsbehälter 58 verbundenen Sammelrücklaufleitung 124 mündet. Das zweite Schaltventil 120 ist in die Leitung 122 geschaltet und in seine Schließstellung vorgespannt.

Wenn im ABS-Betrieb der hydraulischen Bremsanlage eine Bremsung über das Bremspedal 2 eingeleitet wird, erkennt eine Sensorik (nicht dargestellt), daß der über den Fremdkraft-Bremskreis A bzw. den Bremskreis B im Bremssattel 10' anliegende Bremsdruck das gebremste Rad (nicht dargestellt) zum Blockieren bringt. Der Bremsdruck wird nun durch elektromagnetische Ansteuerung der Ventile 114, 118 und 120 geeignet eingestellt. Dazu wird das Entlastungsventil 114 in seine die Betätigungsdruckkammer 156 der Trennkolben-Zylinder-Anordnung 150'' mit dem Vorratsbehälter 58 verbindende Stellung geschaltet, so daß der zwischen der zweiten Druckkammer 8 des Geberzylinders 4 und dem Entlastungsventil 114 anstehende Druck eingeschlossen wird, während der Druck in der Betätigungsdruckkammer 156 über die Entlastungsleitung 116 zum Vorratsbehälter 58 hin auf Null abgebaut wird, so daß der Trennkolben 152'' in seiner Grundstellung verharrt.

Im Fremdkraft-Bremskreis A wird der Bremsdruck, der in der Druckkammer 68' der Kolben-Zylinder-Anordnung 12' des Bremssattels 10' ansteht, durch Schalten der Schaltventile 118, 120 reduziert. Dabei wird der mittels der Hydraulikpumpe 54 und des Drosselventils 16 erzeugte Staudruck durch Schalten des ersten Schaltventils 118 von seiner Durchgangsstellung in seine Sperrstellung gegenüber der Druckkammer 68' der Kolben-Zylinder-Anordnung 12' abgesperrt, während die Druckkammer 68' durch Schalten des zweiten Schaltventils 120 von seiner Sperrstellung in seine Durchgangsstellung mit dem Vorratsbehälter 58 verbunden wird. Im Ergebnis wird der Bremsdruck in der Druckkammer 68' bis zur Unterschreitung der Verzögerungsschwelle abgebaut, bei der das ursprünglich blockierte Rad wieder dreht.

Dreht das ursprünglich blockierte Rad wieder, werden die Ventile 114, 118 und 120 nicht mehr elektromagnetisch angesteuert, so daß sie jeweils in ihre vorgespannte Grundstellung zurückkehren und im Bremssattel 10' wie unter Bezugnahme auf die Fig. 5 beschrieben durch den Fremdkraft-Bremskreis A eine der Betätigungskraft proportionale Bremskraft aufgebracht wird.

Es stellt sich ein Regelvorgang ein, der während der antiblockiergeregelten Bremsung andauert. Durch den beschriebenen Aufbau der Bremsanlage mit den Ventilen 114, 118 und 120 wird dabei verhindert, daß spürbare Regelungsdruckstöße auf das Bremspedal 2 zurückwirken. Insbesondere wird unabhängig von der Schaltstellung der Schaltventile 118 und 120 im Fremdkraft-Bremskreis A der Staudruck erzeugt, der unverändert über den Steuerkreis C an das Bremspedal 2 zurückgemeldet wird, so daß auch im ABS-Betrieb der Bremsanlage ein gutes Pedalgefühl gewährleistet ist.

Bei der gewählten Schaltungsanordnung, gemäß der jedem Zuspannorgan eine Trennkolben-Zylinder-Anordnung 150'' zugeordnet wird, ist unabhängig von der Bremskraftaufteilung jedes einzelne Zuspannorgan so abgesichert, daß bei dessen Ausfall die verbleibenden Zuspannorgane voll funktionstüchtig bleiben. Fällt die Hydraulikpumpe 54 aus, wird wie unter Bezugnahme auf die Fig. 5 beschrieben die Hilfsbremsung über den Bremskreis B bewirkt.

Kommt es zwischen dem Schaltventil 118 und der Betätigungsdruckkammer 156 der Trennkolben-Zylinder-Anordnung 150'' bzw. der Kolben-Zylinder-Anordnung 12' des Bremssattels 10' zu einer Leckage, braucht nach Erfassen einer Abnahme des Druckmittels in dem Vorratsbehälter 58 durch die Füllstandsüberwachung 190 die Hydraulikpumpe 54 nicht abgestellt werden, sofern eine Bewegung der Trennkolben 152'' der Trennkolben-Zylinder-Anordnungen 150'' mittels einem Aktivierungskontakt bzw. Sensor (nicht dargestellt) sensiert werden kann. Bei einer solchen Leckage wird nämlich der in der Servodruckkammer 154 der Trennkolben-Zylinder-Anordnung 150'' des betroffenen Bremskreises anstehende Druck abgebaut, was eine Verschiebung des betreffenden Trennkolbens 152'' aufgrund des in der Betätigungsdruckkammer 156 anstehenden Drucks zur Folge hat. Nach Sensieren einer Verschiebung des betreffenden Trennkolbens 152'' braucht dann lediglich das zugeordnete Schaltventil 118 in seine Sperrstellung geschaltet werden, so daß die über den Abzweig 66' angeschlossenen weiteren Bremskreise unverändert mit dem durch die Hydraulikpumpe 54 und das Drosselventil 16 erzeugten Staudruck versorgt werden können.

An dieser Stelle ist anzumerken, daß die in Fig. 7 gezeigte Bremsanlage zwar die in Fig. 6B dargestellte Variante 150'' der Trennkolben-Zylinder-Anordnung aufweist, gleichermaßen könnte aber auch die in Fig. 5 oder 6A dargestellte Trennkolben-Zylinder-Anordnung 150 bzw. 150' zum Einsatz kommen.

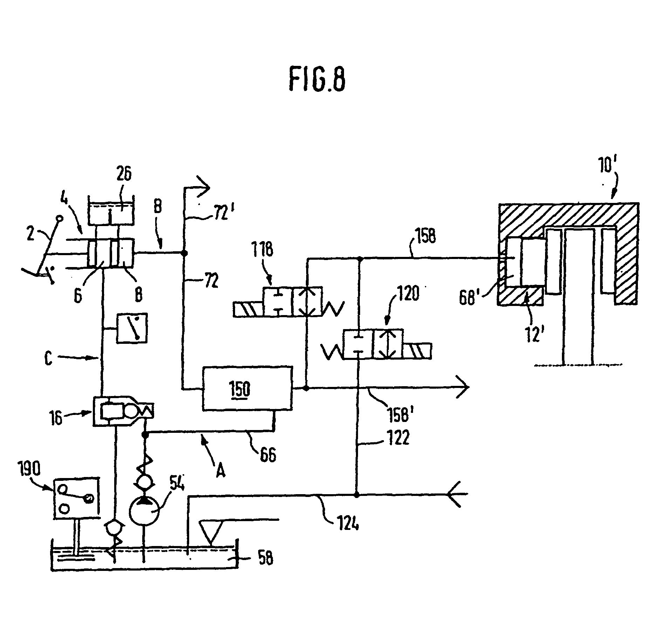

Bei der in Fig. 8 darstellten ersten Variante des fünften Ausführungsbeispiels, die im folgenden nur hinsichtlich ihrer sich vom fünften Ausführungsbeispiel unterscheidenden Merkmale beschrieben wird, sind mehrere Zuspannorgane 10' beispielsweise eines Achskreises oder eines Diagonalkreises über die Druckleitung 158 bzw. deren Abzweig 158' an eine Trennkolben-Zylinder-Anordnung 150 angeschlossen, um die entsprechenden Zuspannorgane 10' gemeinsam gegen einen Ausfall des Servodrucks abzusichern. Auch hier können anstelle der Trennkolben-Zylinder-Anordnung 150 deren Varianten 150' bzw. 150'' eingesetzt werden.

Für jedes Zuspannorgan 10' sind weiterhin zwei Schaltventile 118, 120 vorgesehen, von denen das Schaltventil 118 in die Druckleitung 158 zwischen der Servodruckkammer 154 der Trennkolben-Zylinder-Anordnung 150 und der Druckkammer 68' der Kolben-Zylinder-Anordnung 12' des Zuspannorgans 10', d.h. vom Drosselventil 16 bzw. der Hydraulikpumpe 54 aus gesehen hinter die Trennkolben-Zylinder-Anordnung 150 geschaltet ist. Dadurch kann das gemäß Fig. 7 vorgesehene Entlastungsventil entfallen, weil der Trennkolben 152 der Trennkolben-Zylinder-Anordnung 150 auch während der Antiblockierregelung von dem im Drosselventil 16 erzeugten Staudruck beaufschlagt wird und demgemäß in seiner Grundstellung verharrt.

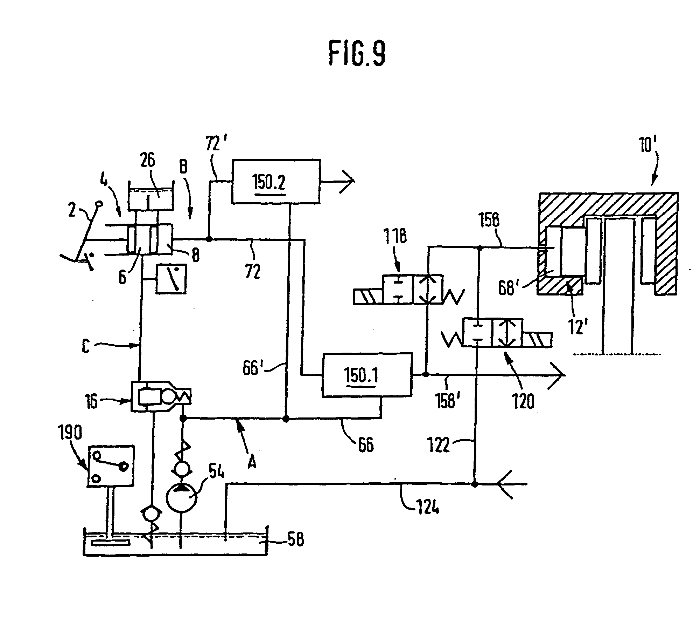

Die Fig. 9 zeigt eine zweite Variante des fünften Ausführungsbeispiels, die im folgenden nur hinsichtlich ihrer sich von der ersten Variante des fünften Ausführungsbeispiels gemäß Fig. 8 unterscheidenden Merkmale beschrieben wird.

Gemäß Fig. 9 ist neben der Trennkolben-Zylinder-Anordnung 150.1 eine dazu parallel geschaltete zweite Trennkolben-Zylinder-Anordnung 150.2 vorgesehen, so daß die Zuspannorgane 10' jedes Kreises, d.h. jedes Achs- oder Diagonalkreises jeweils gemeinsam gegen einen Ausfall des Servodrucks abgesichert sind. Die zweite Trennkolben-Zylinder-Anordnung 150.2 ist dabei mit ihrer Betätigungsdruckkammer 156 an den Abzweig 72' von der Druckleitung 72 angeschlossen, während die Servodruckkammer 154 der zweiten Trennkolben-Zylinder-Anordnung 150.2 über den Abzweig 66' mit der Druckleitung 66 hydraulisch verbunden ist.

Für den Fachmann ist ersichtlich, daß die Schaltvarianten der Bremsanlage gemäß den Fig. 1, 3, 5 und 7 bis 9 in Abhängigkeit von der Anzahl der zu bremsenden Räder, der Art der an den Rädern vorgesehenen Zuspannorgane, den Sicherheitsvorgaben und den gewünschten Regelungsmöglichkeiten den jeweiligen Erfordernissen entsprechend miteinander kombiniert werden können, wobei die unter Bezugnahme auf die Fig. 4 beschriebene elektromagnetische Ansteuerung des Drosselventils 16 (Elektromagnet 126) für eine Antischlupfregelung bzw. Fahrdynamikregelung auch bei den Schaltvarianten der Fig. 5 und 7 bis 9 vorgesehen werden kann.

Es wird eine Bremsanlage offenbart, die einen manuell betätigbaren Geberzylinder mit zwei Druckkammern aufweist. Die erste Druckkammer dient der hydraulischen Ansteuerung eines in einem Servokraft-Bremsbetrieb vom Druckmittel zwangsdurchströmten Drosselventils, um dessen Drosselquerschnitt zur Erzeugung eines definierten Staudrucks einzustellen, welcher zur Aufbringung einer Bremskraft einer im Servokraft-Bremsbetrieb mit dem Drosselventil verbundenen Kolben-Zylinder-Anordnung eines Zuspannorgans anliegt, die mit einer Servodruckkammer einer Trennkolben-Zylinder-Anordnung verbunden ist. Die zweite Druckkammer des Geberzylinders ist mit einer von der Servodruckkammer durch einen Trennkolben getrennten Betätigungsdruckkammer der Trennkolben-Zylinder-Anordnung verbindbar. Somit wird sowohl im Servokraft-Bremsbetrieb als auch bei Ausfall der Servokraft über den Trennkolben am Zuspannorgan eine ausreichende Bremskraft aufgebracht und eine angemessene Rückmeldung der Bremskräfte an den Geberzylinder bewirkt, so daß stets ein gutes Betätigungsgefühl gegeben ist.

### Bezugszeichenliste

- 2: Bremspedal
- 4: Geberzylinder
- 6: erste Druckkammer
- 8: zweite Druckkammer
- 10, 10': Bremssattel
- 12: erste Kolben-Zylinder-Anordnung
- 12': Kolben-Zylinder-Anordnung
- 14: zweite Kolben-Zylinder-Anordnung
- 16: Drosselventil
- 18: Kolbenstange
- 20: erster Kolben
- 22: zweiter Kolben
- 24: Anschluß
- 26: Ausgleichsbehälter
- 28: Steuerleitung
- 30: Steuerkammer
- 32: Ablaufkammer
- 34: Druckkammer
- 36: Ventilkörper
- 38: Wandung
- 40: Steuerkolben
- 42: Wandung
- 44: Durchgangsbohrung
- 46: Dichtsitz
- 48: Ventilspalt
- 50: Rückstellfeder
- 52: Druckleitung
- 54: Hydraulikpumpe
- 56: Ansaugleitung
- 58: Vorratsbehälter
- 60: Rückschlagventil
- 62: Rücklaufleitung
- 64: Druckhalteventil
- 66: Druckleitung
- 66': Abzweig
- 68, 68': Druckkammer
- 70, 70': Kolben
- 72: Druckleitung
- 72': Abzweig
- 74: Druckkammer
- 76: Kolben
- 78: Bremsbelag
- 80: Bremsscheibe
- 82: Pedalschalter
- 84: elektro-hydraulischer Druckschalter

- 86: Gehäuse
- 88: Ringkammer
- 90: Ringkolben
- 92: Zapfen
- 94: Boden
- 96: zylindrische Kammer
- 98: Dichtelement
- 100: Nut
- 102: Außenumfangsfläche
- 104: Dichtelement
- 106: Nut
- 108: Innenumfangsfläche
- 110: Endabschnitt
- 112: Manschette

- 114: Entlastungsventil
- 116: Entlastungsleitung
- 118: erstes Schaltventil
- 120: zweites Schaltventil
- 122: Leitung
- 124: Sammelrücklaufleitung
- 126: Elektromagnet

- 150, 150', 150'': Trennkolben-Zylinder-Anordnung
- 150.1, 150.2 152, 152', 152'': Trennkolben
- 154: Servodruckkammer
- 156: Betätigungsdruckkammer
- 158: Druckleitung
- 158': Abzweig
- 160, 160', 160'': Gehäuse
- 162: Zylinderbohrung
- 164: Anschluß
- 166: Anschluß
- 168, 168': Anschluß
- 170: Druckkammer
- 172: Dichtelement
- 174: Zentralventil
- 176: Rückstellfeder
- 178: Ventilstößel
- 180: Ventildichtkörper
- 182: Ventilfeder
- 184: Dichtsitz
- 186: Aussparung
- 188: Anschlag
- 190: Füllstandsüberwachung

- A: Fremdkraft-Bremskreis
- B: Bremskreis
- C: Steuerkreis

## Patentansprüche

1. Hydraulische Bremsanlage, insbesondere für Kraftfahrzeuge, mit einem an eine Betätigungseinrichtung (2) angeschlossenen Geberzylinder (4), der zwei Druckkammern (6, 8) aufweist, von denen die erste Druckkammer (6) der hydraulischen Ansteuerung eines in einem Servokraft-Bremsbetrieb von einem Druckmittel zwangsdurchströmten Drosselventils (16) dient, um dessen Drosselquerschnitt zur Erzeugung eines definierten Staudrucks einzustellen, welcher zur Aufbringung einer Bremskraft einer im Servokraft-Bremsbetrieb hydraulisch mit dem Drosselventil (16) verbundenen Kolben-Zylinder-Anordnung (12') eines Zuspannorgans (10') anliegt, die mit einer Servodruckkammer (154) einer Trennkolben-Zylinder-Anordnung (150) hydraulisch verbunden ist, während die zweite Druckkammer (8) des Geberzylinders (4) mit einer von der Servodruckkammer (154) durch einen Trennkolben (152) hydraulisch getrennten Betätigungsdruckkammer (156) der Trennkolben-Zylinder-Anordnung (150) hydraulisch verbindbar ist, so daß bei Ausfall der Servokraft über den Trennkolben (152) am Zuspannorgan (10') eine Bremskraft aufgebracht werden kann.

2. Bremsanlage nach Anspruch 1, **dadurch gekennzeichnet, daß** der Trennkolben (152) in Richtung der Betätigungsdruckkammer (156) mittels einer Rückstellfeder (176) in eine Grundstellung vorgespannt ist, in der er während des Servokraft-Bremsbetriebs verharrt.

3. Bremsanlage nach Anspruch 1 oder 2, **dadurch gekennzeichnet, daß** die Trennkolben-Zylinder-Anordnung (150; 150') eine den Trennkolben (152; 152') konzentrisch umgebende weitere Druckkammer (170) aufweist, die von der Betätigungsdruckkammer (156) hydraulisch getrennt ist.

4. Bremsanlage nach Anspruch 3, **dadurch gekennzeichnet, daß** die weitere Druckkammer (170) einen Anschluß (168) für den Staudruck hat und der Trennkolben (152) ein in Schließstellung vorgespanntes Zentralventil (174) aufweist, welches in der Grundstellung des Trennkolbens (152) geöffnet ist, um die weitere Druckkammer (170) mit der Servodruckkammer (154) zu verbinden und an der Kolben-Zylinder-Anordnung (12') des Zuspannorgans (10') den Staudruck anzulegen.

5. Bremsanlage nach Anspruch 3, **dadurch gekennzeichnet, daß** die Servodruckkammer (154) von der weiteren Druckkammer (170) hydraulisch getrennt ist und einen Anschluß (168') für den Staudruck aufweist, über den in der Grundstellung des Trennkolbens (152') an der Kolben-Zylinder-Anordnung (12') des Zuspannorgans (10') der Staudruck anliegt und der bei Ausfall der Servokraft von dem Trennkolben (152') überfahrbar ist, um den Anschluß (168') gegenüber der Servodruckkammer (154) abzuschließen und mit der weiteren Druckkammer (170) zu verbinden.

6. Bremsanlage nach einem der vorhergehenden Ansprüche, **dadurch gekennzeichnet, daß** die Trennkolben-Zylinder-Anordnung (150) einen Sensor aufweist, mittels dessen eine Bewegung des Trennkolbens (152) erfaßbar ist.

7. Bremsanlage nach einem der vorhergehenden Ansprüche, **dadurch gekennzeichnet, daß** zwischen der zweiten Druckkammer (8) des Geberzylinders (4) und der Betätigungsdruckkammer (156) der Trennkolben-Zylinder-Anordnung (150'') ein Entlastungsventil (114) angeordnet ist, welches wahlweise die Betätigungsdruckkammer (156) mit der zweiten Druckkammer (8) oder mit einem Vorratsbehälter (58) verbindet, während in einem mit dem Staudruck beaufschlagbaren Abschnitt zwischen dem Drosselventil (16) und der Servodruckkammer (154) der Trennkolben-Zylinder-Anordnung (150'') zwei Schaltventile (118, 120) vorgesehen sind, von denen das erste Schaltventil (118) die Verbindung zwischen dem Drosselventil (16) und der Servodruckkammer (154) wahlweise unterbricht, und von denen das zweite Schaltventil (120) die Servodruckkammer (154) wahlweise mit dem Vorratsbehälter (58) verbindet.

8. Bremsanlage nach einem der Ansprüche 1 bis 6, **dadurch gekennzeichnet, daß** in einem mit dem Staudruck beaufschlagbaren Abschnitt zwischen der Servodruckkammer (154) der Trennkolben-Zylinder-Anordnung (150) und der Kolben-Zylinder-Anordnung (12') des Zuspannorgans (10') zwei Schaltventile (118, 120) vorgesehen sind, von denen das erste Schaltventil (118) die Verbindung zwischen der Servodruckkammer (154) und der Kolben-Zylinder-Anordnung (12') wahlweise unterbricht, und von denen das zweite Schaltventil (120) die Kolben-Zylinder-Anordnung (12') wahlweise mit einem Vorratsbehälter (58) verbindet.

9. Bremsanlage nach einem der vorhergehenden Ansprüche, **dadurch gekennzeichnet, daß** das Drosselventil (16) als Kugelsitzventil ausgebildet ist, wobei der Drosselquerschnitt des Drosselventils (16) durch Vergrößerung oder Verkleinerung eines Ventilspalts (48) zwischen einem kugelförmigen Ventilkörper (36) und einem ringförmigen Dichtsitz (46) einstellbar ist, der bei Erzeugung des Staudrucks von dem Druckmittel durchströmt wird.

10. Bremsanlage nach einem der vorhergehenden Ansprüche, **dadurch gekennzeichnet, daß** das Drosselventil (16) einen Elektromagneten (126) aufweist, mittels dessen der Drosselquerschnitt des Drosselventils (16) unabhängig von der Betätigungseinrichtung (2) einstellbar ist.

## Claims

1. Hydraulic brake system, particularly for motor vehicles, with a transmission cylinder (44) connected to an actuator (2) and which has two pressure chambers (6, 8), whereof the first pressure chamber (6) is used for hydraulically controlling a throttle valve (16) through which there is a forced flow by a pressure medium in power brake operation, in order to adjust its throttle cross-section for producing a clearly defined dynamic pressure and which for the application of a brake pressure engages on a piston-cylinder arrangement (12') of a clamping member (10') and which in power brake operation is hydraulically connected to the throttle valve (16) and which is hydraulically connected to a servo-pressure chamber (154) of a separating piston-cylinder arrangement (150), whilst the second pressure chamber (8) of the transmission cylinder (4) is hydraulically connectable to an actuating pressure chamber (156) of the separating piston-cylinder arrangement (150) hydraulically separated by a separating piston (152) from the servo-pressure chamber (154), so that if the servo-force fails a brake pressure can be applied to the clamping member (10') by means of the separating piston (152).

2. Brake system according to claim 1, **characterized in that** the separating piston (152) is pretensioned in the direction of the actuating pressure chamber (156) by means of a restoring spring (176) in a normal position where it remains during power brake operation.

3. Brake system according to claim 1 or 2, **characterized in that** the separating piston-cylinder arrangement (150, 150') has a further pressure chamber (170) concentrically surrounding the separating piston (152, 152') and which is hydraulically separated from the actuating pressure chamber (156).

4. Brake system according to claim 3, **characterized in that** the further pressure chamber (170) has a connection (168) for the dynamic pressure and the separating piston (152) has a central valve (174) pretensioned in the closed position and which is open in the normal position of the separating piston (152) in order to connect the further pressure chamber (170) to the servo-pressure chamber (154) and to apply the dynamic pressure to the piston-cylinder arrangement (12') of the clamping member (10').

5. Brake system according to claim 3, **characterized in that** the servo-pressure chamber (154) is hydraulically separated from the further pressure chamber (170) and has a connection (168') for the dynamic pressure by means of which, in the normal position of the separating piston (152'), the dynamic pressure is applied to the piston-cylinder arrangement (12') of the clamping member (10') and over which the separating piston (152') can pass if the servo-force fails in order to seal the connection (168') with respect to the servo-pressure chamber (154) and connect it to the further pressure chamber (170).

6. Brake system according to one of the preceding claims, **characterized in that** the separating piston-cylinder arrangement (150) has a sensor by means of which a movement of the separating piston (152) can be detected.

7. Brake system according to one of the preceding claims, **characterized in that** a relief valve (114) is placed between the second pressure chamber (8) of the transmission cylinder (4) and the actuating pressure chamber (156) of the separating piston-cylinder arrangement (150") and which, as desired, connects the actuating pressure chamber (156) to the second pressure chamber (8) or to a storage tank (58), whilst two on/off valves (118, 120) are provided in a section to which the dynamic pressure can be supplied between the throttle valve (16) and the servo-pressure chamber (154) of the separating piston-cylinder arrangement (150") and whereof the first on/off valve (118), as desired, interrupts the connection between the throttle valve (16) and the servo-pressure chamber (154) and whereof the second on/off valve (120), as desired, connects the servo-pressure chamber (154) to the storage tank (58).

8. Brake system according to one of the claims 1 to 6, **characterized in that** two on/off valves (118, 120) are provided in a section to which the dynamic pressure can be applied between the servo-pressure chamber (154) of the separating piston-cylinder arrangement (150) and the piston-cylinder arrangement (12') of the clamping member (10') and whereof the first on/off valve (118), as desired, interrupts the connection between the servo-pressure chamber (154) and the piston-cylinder arrangement (12') and whereof the second on/off valve (120), as desired, connects the piston-cylinder arrangement (12') to a storage tank (58).

9. Brake system according to one of the preceding claims, **characterized in that** the throttle valve (16) is constructed as a ball seat valve, the throttle cross-section of the throttle valve (16) being adjustable by increasing or decreasing the size of a valve clearance (48) between a spherical valve body (36) and an annular sealing seat (46), through which the pressure medium flows on producing the dynamic pressure.

10. Brake system according to one of the preceding claims, **characterized in that** the throttle valve (16) has an electromagnet (126) by means of which the throttle cross-section of the throttle valve (16) can be adjusted independently of the actuator (2).

## Revendications

1. Système de freinage hydraulique, en particulier pour véhicules automobiles, comprenant un maître-cylindre (4) qui est raccordé à un dispositif d'actionnement (2) et qui comporte deux chambres de pression (6, 8), la première chambre de pression (6) servant à la commande hydraulique d'une soupape d'étranglement (16) traversée par un courant forcé d'un agent de pression, en mode de freinage assisté, afin de régler la section d'étranglement de ladite soupape d'étranglement en vue de produire une pression dynamique définie qui, pour fournir une force de freinage, est appliquée à un dispositif piston-cylindre (12') d'un organe d'application de frein (10') qui est relié par voie hydraulique, en mode de freinage assisté, à la soupape d'étranglement (16) et qui est relié par voie hydraulique à une chambre de servopression (154) d'un dispositif piston séparateur-cylindre (150), tandis que la seconde chambre de pression (8) du maître-cylindre (4) est apte à être reliée par voie hydraulique à une chambre de pression d'actionnement (156) du dispositif piston séparateur-cylindre (150) qui est séparée hydrauliquement de ladite chambre de servopression (154) par un piston séparateur (152), de sorte qu'en cas de défaillance de la force d'assistance, une force de freinage peut être fournie à l'organe d'application de frein (10') par l'intermédiaire du piston séparateur (152).

2. Système de freinage selon la revendication 1, **caractérisé en ce que** le piston séparateur (152) est contraint à l'aide d'un ressort de rappel (176) dans le sens de la chambre de pression d'actionnement (156), vers une position de base dans laquelle il reste pendant le freinage assisté.

3. Système de freinage selon la revendication 1 ou 2, **caractérisé en ce que** le dispositif piston séparateur cylindre (150 ; 150') comporte une autre chambre de pression (170) qui entoure de manière concentrique le piston séparateur (152 ; 152') et qui est séparée hydrauliquement de la chambre de pression d'actionnement (156).

4. Système de freinage selon la revendication 3, **caractérisé en ce que** l'autre chambre de pression (170) comporte un raccordement (168) pour la pression dynamique, et le piston séparateur (152) comporte une soupape centrale (174) qui est contrainte en position fermée et qui est ouverte, dans la position de base du piston séparateur (152), pour relier l'autre chambre de pression (170) à la chambre de servopression (154) et appliquer la pression dynamique au dispositif piston-cylindre (12') de l'organe d'application de frein (10').

5. Système de freinage selon la revendication 3, **caractérisé en ce que** la chambre de servopression (154) est séparée hydrauliquement de l'autre chambre de pression (170) et comporte un raccordement (168') pour la pression dynamique, grâce auquel ladite pression dynamique est appliquée au dispositif piston-cylindre (12') de l'organe d'application de frein (10'), dans la position de base du piston séparateur (152'), et qui peut être franchi par le piston séparateur (152') en cas de défaillance de la force d'assistance, afin d'être fermé par rapport à la chambre de servopression (154) et d'être relié à l'autre chambre de pression (170).

6. Système de freinage selon l'une des revendications précédentes, **caractérisé en ce que** le dispositif piston séparateur-cylindre (150) comporte un capteur à l'aide duquel un déplacement du piston séparateur (152) peut être détecté.

7. Système de freinage selon l'une des revendications précédentes, **caractérisé en ce qu'**il est prévu, entre la seconde chambre de pression (8) du maître-cylindre (4) et la chambre de pression d'actionnement (156) du dispositif piston séparateur-cylindre (150"), une soupape de trop-plein (114) qui relie sélectivement la chambre de pression d'actionnement (156) à la seconde chambre de pression (8) ou à un réservoir (58), tandis qu'il est prévu dans une section apte à être sollicitée par la pression dynamique, entre la soupape d'étranglement (16) et la chambre de servopression (154) du dispositif piston séparateur-cylindre (150"), deux soupapes de commande (118, 120), la première (118) interrompant sélectivement la liaison entre la soupape d'étranglement (16) et la chambre de servopression (154) tandis que la seconde (120) relie sélectivement la chambre de servopression (154) au réservoir (58).

8. Système de freinage selon l'une des revendications 1 à 6, **caractérisé en ce qu'**il est prévu, dans une section apte à être sollicitée par la pression dynamique, entre la chambre de servopression (154) du dispositif piston séparateur-cylindre (150) et le dispositif piston-cylindre (12') de l'organe d'application de frein (10'), deux soupapes de commande (118, 120), la première (118) interrompant sélectivement la liaison entre la chambre de servopression (154) et le dispositif piston-cylindre (12') tandis que la seconde (120) relie sélectivement le dispositif piston-cylindre (12') à un réservoir (58).

9. Système de freinage selon l'une des revendications précédentes, **caractérisé en ce que** la soupape d'étranglement (16) est conçue comme une soupape sphérique à siège, sa section d'étranglement étant réglable grâce à l'agrandissement ou à la réduction d'une fente de soupape (48) entre un corps de soupape sphérique (36) et un siège d'étanchéité annulaire (46), qui est traversée par l'agent sous pression lors de la production de la pression dynamique.

10. Système de freinage selon l'une des revendications précédentes, **caractérisé en ce que** la soupape d'étranglement (16) comporte un électro-aimant (126) à l'aide duquel sa section d'étranglement est réglable indépendamment du dispositif d'actionnement (2).
